(19) Europäisches Patentamt / European Patent Office / Office européen des brevets

(11) **EP 3 873 753 B1**

(12) **FASCICULE DE BREVET EUROPEEN**

(45) Date de publication et mention de la délivrance du brevet:
**08.05.2024 Bulletin 2024/19**

(21) Numéro de dépôt: **19813384.5**

(22) Date de dépôt: **25.10.2019**

(51) Classification Internationale des Brevets (IPC):
**B60H 1/00** *(2006.01)*

(52) Classification Coopérative des Brevets (CPC):
**B60H 1/00499; B60H 1/005; B60H 1/0073; B60H 1/00735; B60H 1/00878;** Y02T 10/70; Y02T 10/7072; Y02T 90/14

(86) Numéro de dépôt international:
**PCT/FR2019/052555**

(87) Numéro de publication internationale:
**WO 2020/089551 (07.05.2020 Gazette 2020/19)**

(54) **INSTALLATION DE GESTION THERMIQUE D'UN VEHICULE**

WÄRMEMANAGEMENTSYSTEM FÜR EIN FAHRZEUG

VEHICLE HEAT MANAGEMENT SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2018 FR 1860089**

(43) Date de publication de la demande:
**08.09.2021 Bulletin 2021/36**

(73) Titulaire: **HUTCHINSON**
**75008 Paris (FR)**

(72) Inventeurs:
• **CHOPARD, Fabrice**
**38400 Saint Martin D'heres (FR)**
• **DE CAMPOS GARCIA, Hélder Filipe**
**45120 Chalette Sur Loing (FR)**
• **ABDALLAH, Ibrahim**
**45200 Montargis (FR)**

(74) Mandataire: **Ernest Gutmann - Yves Plasseraud S.A.S.**
**c/o Plasseraud IP**
**66, rue de la Chaussée d'Antin**
**75440 Paris Cedex 09 (FR)**

(56) Documents cités:
WO-A1-2012/002275    WO-A1-2012/002286
WO-A1-2018/069629    US-A1- 2010 107 635

**Description**

La présente invention concerne une installation de gestion thermique d'un véhicule ainsi qu'un procédé de gestion correspondant.

CONTEXTE

Les installations de gestion thermique connues sont aptes à assurer le chauffage ou le refroidissement (climatisation) de l'habitacle d'un véhicule, ainsi que le chauffage ou le refroidissement d'un organe du véhicule, telle que la batterie.

Les véhicules électriques utilisent des moteurs électriques couplés à des onduleurs alimentés à leur tour à l'aide de batteries embarquées, ces éléments ayant tendance à se chauffer lors de leur utilisation, leur déchargement ou leur rechargement. Par ailleurs, un véhicule hybride comporte également un moteur thermique apte à assurer l'avancement du véhicule, en alternance ou en complément des moteurs électriques.

Afin d'assurer un fonctionnement optimal de ces organes, il est utile de les conditionner thermiquement, c'est-à-dire de maintenir leur température, durant le fonctionnement nominal, dans une plage de température déterminée et d'atteindre cette plage le plus vite possible lors de régimes de fonctionnement transitoires (par exemple lors d'un démarrage). A titre d'exemple, pour les batteries Li+ (c'est-à-dire les batteries lithium), la plage de température de fonctionnement est comprise entre 0 et 55°C, de préférence entre 15 et 35°C. Cette plage de fonctionnement optimale varie selon la composition chimique de la batterie. En effet, les batteries à électrolyte solide possèdent une plage de températures de fonctionnement allant jusqu'à plus de 100°C.

Parallèlement, l'installation doit également pouvoir assurer un conditionnement efficace de l'habitacle, notamment lorsque l'air extérieur est relativement froid ou chaud. Il existe un besoin de pouvoir conditionner rapidement l'habitacle, en particulier lorsque l'habitacle est à des températures très éloignées de la température de confort souhaitée par l'utilisateur.

Le document WO 2018/069629, au nom de la Demanderesse, divulgue une installation de conditionnement thermique d'un habitacle et/ou d'au moins un organe d'un véhicule automobile.

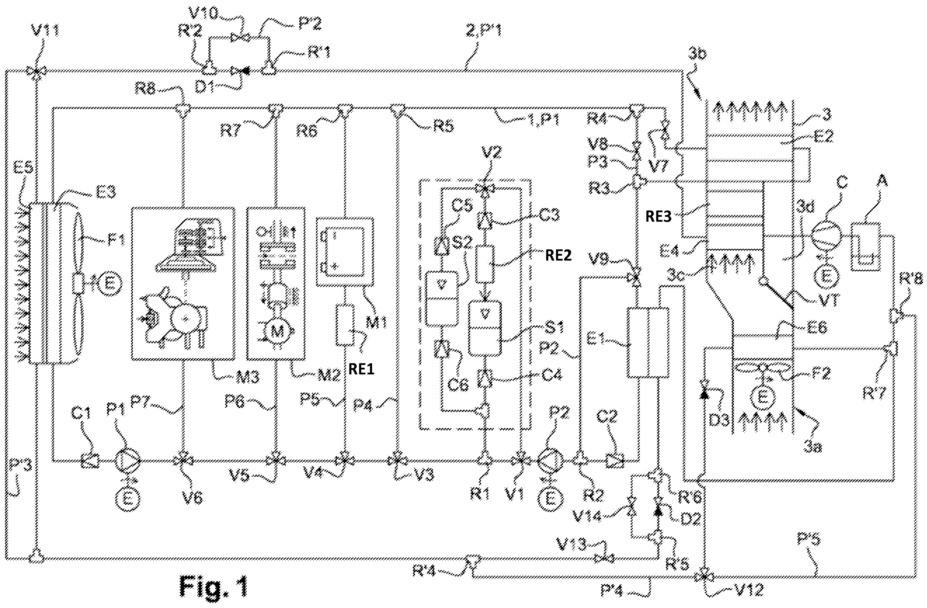

Cette installation, illustrée à la figure 1, comporte un circuit 1 de circulation d'un fluide caloporteur, telle par exemple que de l'eau glycolée.

Le circuit 1 de fluide caloporteur comporte :

- une première pompe P1,
- une seconde pompe P2,
- un premier échangeur de chaleur E1 apte à échanger de la chaleur avec un fluide frigorigène,
- un second échangeur de chaleur E2 apte à échanger de la chaleur avec de l'air,
- un troisième échangeur de chaleur E3 apte à échanger de la chaleur avec de l'air,
- des moyens de stockage de calories S1 (également appelé stockeur chaud),
- des moyens de stockage de frigories S2 (également appelé stockeur froid),
- des premiers moyens de chauffage RE1 du fluide caloporteur, tels par exemple qu'une résistance électrique,
- des seconds moyens de chauffage RE2 du fluide caloporteur, tels par exemple qu'une résistance électrique,
- des clapets anti-retours C1, C2, C3, C4, C5, C6,
- des vannes à trois voies V1, V2, V3, V4, V5, V6, V9, les différentes voies de ces vannes pouvant être commandées et thermostatées,
- des vannes d'arrêt V7, V8, ces vannes pouvant être commandées et thermostatées,
- des moyens M1 de chauffage et/ou de refroidissement d'un premier organe du véhicule, telle qu'au moins une batterie du véhicule,
- des moyens M2 de chauffage et/ou de refroidissement d'un deuxième organe du véhicule, tel qu'au moins un moteur électrique du véhicule et/ou des organes associés tel qu'un onduleur par exemple,
- des moyens M3 de chauffage et/ou de refroidissement d'un troisième organe du véhicule, tel qu'un moteur thermique du véhicule, destinés en particulier à chauffer et/ou refroidir le circuit d'huile du moteur thermique.

Plus particulièrement, le circuit 1 de fluide caloporteur comporte :

- une portion P1 formant une boucle s'étendant de l'entrée de la pompe P1 à la sortie de la pompe P1 et comportant successivement, en partant de la sortie de la pompe P1, la vanne V6, la vanne V5, la vanne V4, la vanne V3, un embranchement ou point de raccordement R1, la vanne V1, la pompe P2, un embranchement R2, le clapet C2, l'échangeur E1, la vanne V9, un embranchement R3, l'échangeur E2, la vanne V7, un embranchement R4, un embranchement R5, un embranchement R6, un embranchement R7, un embranchement R8, le troisième échangeur E3, le clapet C1 et la pompe P1,
- une portion P2 de dérivation reliant l'embranchement R2 et la vanne V9,
- une portion P3 de dérivation reliant l'embranchement R3 et l'embranchement R4, ladite portion P3 comportant la vanne V8,
- une portion P4 de dérivation reliant l'embranchement R5 et la vanne V3,
- une portion P5 reliant l'embranchement R6 et la vanne V4, ladite portion P5 comportant, depuis l'embranchement R6 vers la vanne V4, les moyens de chauffage et/ou de refroidissement M1 et les moyens de chauffage R1,
- une portion P6 reliant l'embranchement R7 et la vanne V5, ladite portion P6 comportant les moyens de chauffage et/ou de refroidissement M2,
- une portion P7 reliant l'embranchement R8 et la vanne V6, ladite portion P7 comportant les moyens de chauffage et/ou de refroidissement M3.

L'installation comporte en outre un circuit 2 de circulation d'un fluide frigorigène.

Le fluide réfrigérant est par exemple du type d'un fluide super-critique, tel que du dioxyde de carbone, par exemple, connu sous l'appellation R744. Il peut aussi être un fluide sous-critique, tel que l'hydrofluorocarbone connu sous la dénomination R134a ou un fluide frigorigène à faible nuisance sur l'effet de serre, c'est-à-dire qui soit en mesure d'offrir une solution durable pour les climatiseurs automobiles, connu sous la dénomination HFO1234yf.

Le circuit 2 de fluide frigorigène comporte :

- un compresseur C,
- un quatrième échangeur de chaleur E4, apte à former un condenseur,
- un cinquième échangeur de chaleur E5, apte à former un évaporateur et/ou un condenseur,
- un sixième échangeur de chaleur E6, apte à former un évaporateur,
- un premier détendeur D1,
- un deuxième détendeur D2,
- un troisième détendeur D3,
- un accumulateur A,
- des vannes à trois voies V11, V12, les différentes voies de ces vannes pouvant être commandées et thermostatées,
- des vannes d'arrêt V10, V13, V14, ces vannes pouvant être commandées et thermostatées.

Les détendeurs D1, D2, D3 peuvent être à perte de charge fixe et/ou à ouverture variable ou à perte de charge variable, ladite ouverture ou ladite perte de charge étant apte à être régulée par l'intermédiaire de moyens de commande non représentés.

Plus particulièrement, le circuit 2 de fluide frigorigène comporte :

- une portion P'1 formant une boucle s'étendant de l'entrée du compresseur C à la sortie du compresseur C et comportant successivement, en partant de la sortie du compresseur C, l'échangeur E4, un embranchement R'1, le détendeur D1, un embranchement R'2, la vanne V11, l'échangeur E5, un embranchement R'3, un embranchement R'4, la vanne V13, un embranchement R'5, le détendeur D2, un embranchement R'6, l'échangeur E1, un embranchement R'7, un embranchement R'8, l'accumulateur A et le compresseur C,
- une portion P'2 de dérivation reliant l'embranchement R'1 et l'embranchement R'2, ladite portion P'2 comportant la vanne V10,
- une portion P'3 de dérivation reliant la vanne V11 et l'embranchement R'3,
- une portion P'4 reliant l'embranchement R'4 et l'embranchement R'7 et comportant, de l'embranchement R'4 vers l'embranchement R'7, la vanne V12, le détendeur D3 et l'échangeur E6,
- une portion P'5 de dérivation reliant la vanne V12 à l'embranchement R'8.

Les échangeurs E2, E4, E6 sont situés dans un conduit 3 de circulation d'air d'une installation de chauffage, ventilation et/ou climatisation, également appelée H.V.A.C. (*Heating, Ventilation and Air-Conditioning,* en anglais), ledit conduit 3 étant destiné à déboucher dans l'habitacle du véhicule.

Le conduit 3 comporte une zone amont au niveau de laquelle est introduit de l'air issu de l'extérieur du véhicule, une zone médiane, et une zone aval. Les termes « amont » et « aval » sont définis par rapport au sens de circulation de l'air dans le conduit, ce sens étant représenté par des flèches sur la figure 1. L'échangeur E6 est monté dans la zone amont 3a du conduit 3. L'échangeur E2 est monté dans la zone aval 3b du conduit 3. La zone médiane est séparée en deux canaux, à savoir un premier canal 3c dans lequel est monté l'échangeur E4, et un second canal 3d. Les deux canaux 3c et 3d se rejoignent au niveau de la zone aval 3b du conduit 3. Des moyens de chauffage RE3, telle par exemple qu'une résistance électrique, sont montés dans le canal 3c, par exemple en aval de l'échangeur E4.

Un volet VT dont la position est commandée est situé en amont des canaux 3c et 3d et permet de faire circuler le fluide sélectivement dans le canal 3c ou dans le canal 3d. Le volet VT peut également faire circuler une partie déterminée du fluide dans le canal 3c et une partie déterminée du fluide dans le canal 3d.

L'installation comporte en outre un ventilateur F1 permettant de forcer le passage d'air extérieur au travers des échangeurs E3 et E5, situés par exemple en face avant du véhicule, et un second ventilateur F2, monté par exemple dans la zone amont 3a du conduit 3, de façon à forcer le passage d'air au travers du conduit 3.

Les pompes P1, P2, le compresseur C et les ventilateurs F1, F2 sont actionnés par des moteurs électriques.

L'installation comporte en outre des capteurs permettant de mesurer par exemple la température, le débit et/ou la pression du fluide caloporteur, du fluide frigorigène et/ou de l'air, des moyens de commande permettant de commander les différents actionneurs (moteurs, vannes, etc...) et des moyens de calculs ayant notamment en entrée les informations issues desdits capteurs et permettant de délivrer en sortie des informations envoyées auxdits moyens de commande.

Bien entendu, la forme de réalisation illustrée à la figure 1 n'est pas limitative, d'autres formes de réalisation pouvant être envisagées pour assurer les fonctions décrites ci-après.

Comme cela est décrit dans le document WO 2018/069629 une telle installation est apte à fonctionner suivant de nombreux modes de fonctionnement visant à assurer la gestion thermique des différents éléments de l'installation, en fonction des besoins.

Le document US 2010/107635 A1 divulgue une installation de gestion thermique d'un véhicule de l'art antérieur.

RESUME DE L'INVENTION

Il existe un besoin d'améliorer encore les performances d'une telle installation.

A cet effet, l'invention concerne une installation de gestion thermique d'un véhicule comportant :

- au moins un stockeur de calories et/ou de frigories formant une source de calories ou de frigories,
- au moins un élément du véhicule à chauffer ou à refroidir,
- au moins une source additionnelle de calories ou de frigories,
- des moyens de détection aptes à détecter si des calories ou des frigories sont disponibles au niveau de l'une desdites sources,
- des moyens de contrôle-commande aptes à distribuer les calories ou les frigories disponibles au niveau des sources aux éléments à chauffer ou à refroidir, en fonction des besoins transitoires ou nominaux,

caractérisée en ce qu'elle comporte des moyens de prédiction aptes à réaliser au moins une prédiction visant à déterminer :

- • si des calories ou des frigories seront disponibles ultérieurement, au niveau de l'une desdites sources et/ou,
- • si un besoin en calories ou en frigories existera ultérieurement au niveau de l'un desdits éléments à chauffer ou à refroidir.

Les moyens de prédiction permettent ainsi d'adapter le fonctionnement de l'installation, non pas aux seules données et contraintes des différents éléments de l'installation détectées en temps réel, mais à des prédictions permettant d'adapter le comportement de l'installation à des contraintes ou à des opportunités ultérieures à venir, telles que la disponibilité ou le manque ultérieur de calories ou de frigories au niveau d'une source par exemple.

En outre, les moyens de contrôle-commande permettent d'adapter le fonctionnement de l'installation en fonction :

- des besoins transitoires, il s'agit de besoins se manifestant sur une courte période de temps pour mener vers un fonctionnement nominal à un état d'équilibre ;
- des besoins nominaux consistant à maintenir à un état d'équilibre.

Les prédictions sont en particulier réalisées en prenant en compte les données collectées relatives au profil de chaque l'utilisateur.

L'installation peut comporter des moyens de gestion aptes à :

- définir un besoin thermique pour un ou plusieurs des éléments du véhicule à chauffer ou à refroidir et/ou un besoin électrique pour un ou plusieurs des éléments du véhicule à alimenter électriquement, à partir de données d'entrées liées à l'état des éléments du véhicule à chauffer ou à refroidir, à l'état des sources de calories ou de frigories, d'une requête d'un utilisateur et/ou d'une prédiction,
- définir un mode de fonctionnement de l'installation à partir dudit besoin thermique, dudit besoin électrique et/ou d'une prédiction,

- actionner des actionneurs de l'installation, de façon à faire fonctionner l'installation selon le mode de fonctionnement choisi.

Les actionneurs comportent par exemple au moins une pompe, au moins un compresseur, au moins une vanne commandée et/ou au moins une résistance électrique.

Le besoin thermique est par exemple le besoin de chauffer ou de refroidir l'un des éléments de l'installation ou du véhicule, telle par exemple qu'une batterie, un moteur thermique à combustion interne, ou des composants électriques ou électroniques. Le besoin thermique peut également comporter une information quant à l'intensité du chauffage ou du refroidissement à réaliser. Le besoin thermique peut également être neutre, c'est-à-dire ne nécessitant aucun chauffage, ni aucun refroidissement de l'élément concerné. Un besoin thermique peut être associé à chacun des éléments à chauffer ou à refroidir de l'installation.

Les moyens de gestion peuvent être aptes à, à partir dudit besoin thermique et/ou dudit besoin électrique, déterminer si une ou plusieurs conditions sont remplies, lesdites conditions visant à définir si de l'énergie thermique et/ou électrique est disponible, et, en fonction desdites conditions, définir le mode de fonctionnement de l'installation.

Les moyens de gestion peuvent être aptes à définir un mode de fonctionnement de l'installation optimal parmi plusieurs modes de fonctionnement possibles pour répondre à un besoin thermique et/ou électrique.

Le mode de fonctionnement optimal peut être un compromis entre notamment les paramètres suivants : confort de l'utilisateur, état de charge de la batterie (influant notamment sur la possibilité de parcourir le reste d'un trajet donné, la possibilité de terminer un trajet donné avec un état de charge de la batterie suffisant pour un trajet ultérieur), état de santé de la batterie.

Le mode de fonctionnement optimal peut être destiné à réduire l'impact des conditions extérieures (notamment la température extérieure), sur les paramètres précités.

L'installation peut comporter des moyens de régulation aptes à réguler des actionneurs appartenant à l'installation et permettant de distribuer les calories ou les frigories disponibles au niveau des sources aux éléments à chauffer ou à refroidir. Les moyens de régulation agissent de façon dynamique, de façon à maintenir une valeur mesurée ou calculée, par exemple la température d'un élément de l'installation ou du véhicule, proche d'une valeur de consigne.

Les moyens de régulation peuvent comporter un régulateur PID, appelé aussi correcteur PID (proportionnel, intégral, dérivé), une commande prédictive (MPC pour *Model Predictive Control*), un contrôleur de logique floue ou de contrôle optimal. De tels moyens de régulation sont connus du domaine de l'automatique et leur fonctionnement ne sera pas expliqué en détail.

Les moyens de prédiction sont aptes à calculer la disponibilité ultérieure des calories et/ou des frigories, et/ou les besoins ultérieurs en calories et/ou frigories à partir d'au moins une des données d'entrées suivantes :

- données liées aux habitudes et/ou aux préférences de confort de l'utilisateur, en particulier :

  • données liées à la température de l'habitacle du véhicule habituellement souhaitée par l'utilisateur,
  • débit d'air habituellement souhaité par l'utilisateur dans l'habitacle,
  • répartition du débit d'air habituellement souhaitée par l'utilisateur dans l'habitacle, entre différents points d'entrée de l'air dans l'habitacle, tels que des aérateurs,
  • répartition entre l'air neuf extérieur à l'habitacle et l'air recyclé issu de l'habitacle, habituellement souhaitée par l'utilisateur,
  • orientation des aérateurs habituellement souhaitée par l'utilisateur,

- données liées aux habitudes et/ou aux préférences de conduite de l'utilisateur, en particulier :

  • données liées à la vitesse du véhicule,
  • temps de roulage du véhicule,
  • temps d'arrêt du véhicule,
  • accélération du véhicule,
  • régime d'un moteur thermique ou électrique du véhicule,

- données liées au trajet de l'utilisateur, en particulier :

  • coordonnées géographiques du lieu de départ et/ou du lieu d'arrivée prévu ou fourni par l'utilisateur,
  • coordonnées géographiques en temps réel du véhicule,
  • données météorologiques, telles que la vitesse et l'orientation du vent, la température, la pluviométrie, l'hygrométrie, notamment sur le trajet, le lieu de parking et/ou le lieu d'arrivée prévus,

- conditions de circulation sur le trajet,
- probabilité que l'utilisateur se connecte à une borne de recharge électrique de la batterie électrique du véhicule dans une période de temps donnée,

- données liées à l'état de santé de la batterie,
- données liées à l'état de charge d'une batterie, en particulier :

- type de charge de la batterie, telle qu'une charge rapide ou une charge normale,
- temps de charge prévu.

Bien entendu, la liste ci-dessus n'est pas exhaustive et d'autres types de données peuvent être utilisées.

Les moyens de prédiction peuvent utiliser des modèles théoriques et/ou des modèles d'apprentissage aussi appelée de « Machine Learning », par exemple à l'aide d'un réseau de neurones artificiels, ou peuvent utiliser des bases de données et être basés sur des données préexistantes. Il est également possible d'utiliser un modèle basé sur des équations mathématiques simulant le comportement des différents éléments de l'installation ou du véhicule.

Au moins une source de calories et/ou de frigories forme également un élément à chauffer ou à refroidir, en fonction des conditions de fonctionnement du véhicule.

L'installation peut comporter au moins un stockeur de calories et au moins un stockeur de frigories.

Les moyens de stockage peuvent comporter un matériau à changement de phase, par exemple de l'eau, du glycol, une solution saline ou de la paraffine. En particulier, le matériau à changement de phase (MCP) thermique pourra être constitué de n-hexadécane, d'eicosane ou d'un sel de lithium, tous présentant des points de fusion inférieurs à 40°C. En alternative, le matériau MCP peut être à base d'acide gras ou de sel eutectique ou hydraté, ou encore d'alcools gras, par exemple. De tels moyens de stockage thermique permettent d'accumuler de l'énergie thermique (calories ou frigories) par chaleur latente (changement de phase) ou par chaleur sensible.

L'installation peut comporter au moins une batterie apte à former une source de calories ou de frigories et/ou apte à former un élément à chauffer ou à refroidir.

La batterie peut être montée dans un boîtier logeant un matériau à changement de phase apte à stocker des calories et/ou des frigories.

L'installation peut comporter un dispositif de chauffage, ventilation et/ou conditionnement d'un habitacle du véhicule, comprenant :

- un circuit de fluide frigorigène
- un circuit de fluide caloporteur,
- un premier échangeur de chaleur apte à échanger de la chaleur entre le fluide caloporteur et de l'air destiné à déboucher dans l'habitacle du véhicule,
- un deuxième échangeur de chaleur apte à échanger de la chaleur entre le fluide frigorigène et de l'air destiné à déboucher dans l'habitacle du véhicule et apte à former un condenseur,
- un troisième échangeur de chaleur apte à échanger de la chaleur entre le fluide frigorigène et de l'air destiné à déboucher dans l'habitacle du véhicule et apte à former un évaporateur,
- au moins un quatrième échangeur de chaleur apte à échanger de la chaleur entre le fluide frigorigène et le fluide caloporteur,
- les moyens de contrôle étant aptes à distribuer les calories ou les frigories entre les sources et les éléments à chauffer ou à refroidir, au travers du circuit de fluide frigorigène, du circuit de fluide caloporteur et/ou desdites échangeurs.

Le dispositif de chauffage, ventilation et/ou conditionnement peut comporter un cinquième échangeur de chaleur apte à échanger de la chaleur entre le fluide caloporteur ou le fluide frigorigène, d'une part et des gaz chauds issus d'une ligne d'échappement du véhicule, d'autre part.

La batterie peut être apte à échanger de la chaleur avec le fluide caloporteur.

Le stockeur peut être apte à échanger de la chaleur avec le fluide caloporteur

L'installation peut comporter un moteur thermique apte à échanger de la chaleur avec un fluide caloporteur, par exemple de l'huile. Le moteur thermique peut être au moins un élément du véhicule à chauffer ou à refroidir et/ou au moins une source de calories.

L'installation peut comporter au moins une résistance électrique apte à échanger de la chaleur avec de l'air destiné à l'habitacle du véhicule ou avec le fluide caloporteur précité.

L'installation peut comporter au moins un organe électrique apte à échanger de la chaleur avec un fluide caloporteur, l'organe électrique étant une machine électrique et/ou un module de puissance apte à former une source de calories.

L'installation peut comporter des moyens aptes à assurer le pré-conditionnement de l'habitacle avant que l'utilisateur n'entre dans le véhicule.

L'installation peut comporter des moyens de gestion aptes à utiliser un éventuel surplus d'énergie électrique contenu dans la batterie véhicule, déterminé en fonction de la prédiction réalisée, pour alimenter un réseau électrique intelligent extérieur au véhicule.

Dans un véhicule électrifié, la prédiction du trajet et/ou du confort ainsi que les différentes allocations thermiques associées peuvent représenter des variables d'entrées pour une stratégie de rechargement et de déchargement prédictif de la batterie et/ou des stockeurs thermiques. Cette stratégie peut être définie dans le contexte d'une gestion intelligente du réseau électrique, également appelé « smart grid » en anglais. Une telle gestion peut notamment consister à :

- Recharger le stockeur de calories en heures creuses pour un démarrage à froid en heures pleines. Les heures creuses sont définies comme des plages horaires où le coût de l'énergie est faible, par opposition aux heures dites pleines, où le coût de l'énergie est important.
- Gérer l'énergie de la batterie selon les besoins prédits pour effectuer le trajet.
- Allouer le surplus d'énergie électrique de la batterie vers le réseau électrique intelligent.
- Optimiser le rechargement de la batterie et autoriser le réseau intelligent à donner priorité à d'autres besoins électriques.

L'invention concerne également un procédé de gestion thermique d'un véhicule comportant une installation du type précité, caractérisé en en ce qu'il comporte les étapes consistant à :

- réaliser au moins une prédiction visant à déterminer :

  - si des calories ou des frigories seront disponibles ultérieurement, au niveau de l'une desdites sources et/ou,
  - si un besoin en calories ou en frigories existera ultérieurement au niveau de l'un desdits éléments à chauffer ou à refroidir.

- distribuer les calories ou les frigories disponibles au niveau des sources aux éléments à chauffer ou à refroidir, en fonction des besoins, notamment en fonction de ladite prédiction.

L'invention sera mieux comprise et d'autres détails, caractéristiques et avantages de l'invention apparaîtront à la lecture de la description suivante faite à titre d'exemple non limitatif en référence aux dessins annexés.

BREVE DESCRIPTION DES FIGURES

- la figure 1 est une installation de conditionnement thermique d'un habitacle et/ou d'au moins un organe d'un véhicule automobile ;
- la figure 2 illustre les niveaux de contrôle de la stratégie de gestion thermique mise en oeuvre par l'installation de gestion thermique selon l'invention ;
- la figure 3 illustre un exemple d'algorithme de prédiction selon l'invention ;
- la figure 4 illustre les moyens de gestion de l'installation selon l'invention ;
- la figure 5 illustre un exemple de circuit de refroidissement pour un moteur à combustion interne ;
- la figure 6 est un organigramme de fonctionnement d'un générateur de requête thermique d'un moteur à combustion interne selon l'invention ;
- la figure 7 illustre l'emploi de différents modes de fonctionnement thermique en fonction des requêtes thermiques émises pour un moteur à combustion interne et l'exemple de circuit de refroidissement ;
- la figure 8 illustre un organigramme de fonctionnement d'un sélecteur de modes de fonctionnement thermique pour un moteur à combustion interne, au regard des requêtes thermiques émises ;
- la figure 9 illustre les tolérances thermiques des batteries embarquées dans un véhicule électrique ou hybride. Les plages de températures de fonctionnement illustrées sont définies à titre d'exemples pour une batterie Li+.
- la figure 10 illustre un organigramme de fonctionnement d'un générateur de requête thermique d'une batterie ;
- la figure 11 est un organigramme de fonctionnement d'un sélecteur de modes de fonctionnement thermique pour les batteries, au regard des requêtes thermiques émises ;
- la figure 12 illustre les conditions de confort pour un passager dans l'habitacle du véhicule ;
- la figure 13 est un organigramme de fonctionnement d'un sélecteur de modes de fonctionnement thermique pour l'habitacle d'un véhicule, au regard des requêtes thermiques émises ;

- les figures 15a à 15h illustrent les instructions du sélecteur du mode de fonctionnement en réponse aux requêtes thermiques émises ;
- la figure 16 illustre un organigramme d'un générateur de requête de l'électronique de puissance embarqué dans le véhicule.

DESCRIPTION DETAILLEE

L'installation de gestion thermique d'un véhicule conformément à l'invention est similaire à celle décrite en référence à la figure 1.

L'invention vise en particulier la gestion thermique et le fonctionnement d'une telle installation.

On notera que l'installation selon l'invention comporte des moyens de détection et/ou de calculs aptes à détecter si des calories ou des frigories sont disponibles au niveau d'au moins une source de calories ou de frigories. Ces moyens de détection comportent notamment des capteurs de température, de pression, de débit, etc... et/ou des moyens de calculs se basant sur des données d'état des différents éléments de l'installation.

Les sources de calories peuvent par exemple être formées par le moteur thermique, l'électronique de puissance alimentant le moteur électrique, le stockeur de de calories S1, la batterie, l'air extérieur au véhicule, les résistances électriques RE1, RE2, RE3, etc. Les sources de frigories peuvent par exemple être formées par l'air extérieur ou le stockeur de frigories S2, par exemple. Bien entendu, il peut exister d'autres sources de calories ou de frigories.

L'installation comprend également des moyens de contrôle aptes à distribuer les calories ou les frigories, disponibles au niveau desdites sources, aux éléments à chauffer ou à refroidir, en fonction des besoins. Ces moyens de contrôle comprennent les différents circuits de fluide caloporteur et de fluide frigorigène 1, 2 détaillés plus haut et permettant la circulation des calories et des frigories vers les éléments du véhicule à chauffer et/ou refroidir, mais aussi un contrôleur de composants, permettant d'activer et de désactiver les différents composants impliqués dans le contrôle de l'installation, tels par exemple que les vannes, la pompe, le compresseur ou les ventilateurs.

En d'autres termes, le contrôle de l'installation de sorte qu'elle fonctionne selon différents modes de fonctionnement, nécessite une activation/désactivation de nombreux composants selon un modèle prédéfini.

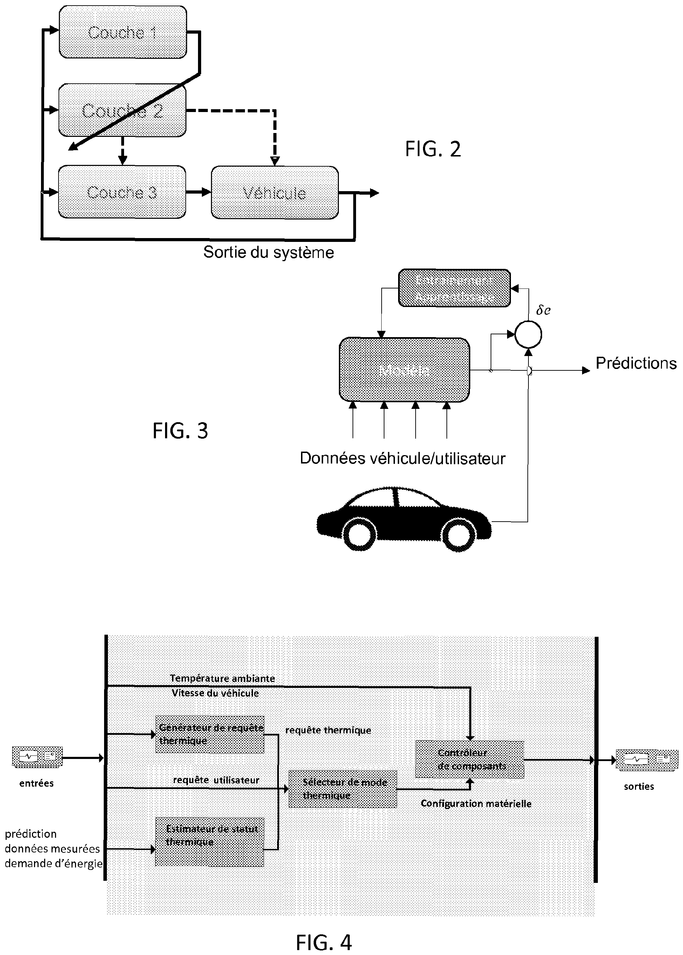

L'installation selon l'invention vise à mettre en oeuvre une stratégie de gestion thermique hiérarchisées en trois niveaux de contrôle, tels qu'illustrés à la figure 2.

Le premier niveau, ou couche 1, est le niveau supérieur de la stratégie, dédié à la prédiction pour optimiser la gestion thermique de l'installation. La prédiction peut être basée sur un modèle et/ou des données collectées, qui, traitées par des algorithmes d'apprentissage et/ou des techniques d'intelligence artificielles, permettent d'obtenir un modèle du système, ici le véhicule et en particulier les éléments à refroidir et à chauffer ainsi que l'installation de gestion thermique. Ainsi, le comportement du système peut être prédit en utilisant le modèle du système, et en prenant en compte, en données d'entrée, les données météorologiques et/ou les habitudes et/ou préférences de l'utilisateur et/ou les données relatives au trajet effectué, par exemple.

Le deuxième niveau, ou couche 2, est le niveau intermédiaire de la stratégie, définissant la gestion thermique de l'installation en temps réel. En prenant en considération l'état thermique des éléments de l'installation et du véhicule en temps réel, ainsi que les données de prédiction du premier niveau de la stratégie, le deuxième niveau de stratégie sélectionne un mode thermique adapté et optimisé pour garantir le bon fonctionnement des éléments de l'installation et du véhicule.

Le troisième niveau, ou couche 3, est le niveau inférieur de la stratégie, où sont définies les lois de commande d'activation ou de désactivation des composants sélectionnés en fonction du mode thermique sélectionné au deuxième niveau de la stratégie. Egalement, ce niveau peut comprendre des correcteurs de commande de sorte à s'assurer une correspondance précise entre la sortie du système et la référence comme par exemple la température réelle de l'habitacle et la température souhaitée dans l'habitacle.

Dans une variante de l'invention, il est également envisageable que la deuxième couche gère l'activation et la désactivation des différents composants et que la troisième couche émet alors les lois de commande dynamique adéquates en regard de la sortie de la deuxième couche, c'est-à-dire des composants activés ou désactivés.

Pour mettre en oeuvre le premier niveau de la stratégie de gestion thermique, l'installation illustrée sur la figure 1 comporte en outre des moyens de prédiction aptes à réaliser au moins une prédiction visant à déterminer :

- si des calories ou des frigories seront disponibles ultérieurement, au niveau de l'une desdites sources et/ou,
- si un besoin en calories ou en frigories existera ultérieurement au niveau de l'un desdits éléments à chauffer ou à refroidir.

Les moyens de prédiction de l'installation, mettant en oeuvre le premier niveau de la stratégie de gestion thermique telle qu'illustrée sur la figure 2, comprennent notamment un algorithme de prédiction. Un exemple de l'architecture globale est illustré sur la figure 3.

L'algorithme d'apprentissage, ou de « Machine Learning », en temps réel permet de déterminer un modèle pouvant prédire le comportement thermique du véhicule et/ou l'état du véhicule mais également des événements. L'algorithme vise à établir des modèles comportementaux sur la base des habitudes et/ou des préférences de l'utilisateur, de ses interactions avec le véhicule, ainsi que des données du véhicule mesurées en réponse à ses interactions. Cet algorithme est alimenté avec les deux types de données suivants :

- des données mesurées sur le véhicule (état de charge de la batterie, position géographique, horodatage) mais également provenant de l'utilisateur du véhicule (consignes souhaitées par l'utilisateur). Ces données peuvent être mesurées en temps réel sur le véhicule lors de son utilisation ou antérieurement en se basant sur un historique d'un véhicule utilisé. Dans ce dernier cas, on parle de données archivées. Il est bien-sûr envisageable que des données mesurées et des données archivées soient utilisées ;
- des données représentant la vérité-terrain, connu sous l'expression anglaise « ground-truth data», qui, comparées au comportement prédit fourni à l'algorithme d'apprentissage, permettent de réajuster le modèle en conséquence. En sortie de cet algorithme de prédiction sont obtenus des valeurs estimées de variables du véhicule ou le statut d'évènements prédéfinis, dans un horizon temporel fixe ou variable, réglable par exemple par l'utilisateur.

Par exemple, les moyens de prédiction sont aptes à calculer la disponibilité ultérieure des calories et/ou des frigories, et/ou les besoins ultérieurs en calories et/ou frigories à partir d'au moins une des données d'entrées suivantes :

- données liées aux habitudes et/ou aux préférences de confort de l'utilisateur, en particulier :

  • données liées à la température de l'habitacle du véhicule habituellement souhaitée par l'utilisateur,
  • débit d'air habituellement souhaité par l'utilisateur dans l'habitacle,
  • répartition du débit d'air habituellement souhaitée par l'utilisateur dans l'habitacle, entre différents points d'entrée de l'air dans l'habitacle, tels que des aérateurs,
  • répartition entre l'air neuf extérieur à l'habitacle et l'air recyclé issu de l'habitacle, habituellement souhaitée par l'utilisateur,
  • orientation des aérateurs habituellement souhaitée par l'utilisateur,

- données liées aux habitudes et/ou aux préférences de conduite de l'utilisateur, en particulier :

  • données liées à la vitesse du véhicule,
  • temps de roulage du véhicule,
  • temps d'arrêt du véhicule,
  • accélération du véhicule,
  • régime d'un moteur thermique ou électrique du véhicule,

- données liées au trajet de l'utilisateur, en particulier :

  • coordonnées géographiques du lieu de départ et/ou du lieu d'arrivée prévu ou fourni par l'utilisateur,
  • coordonnées géographiques en temps réel du véhicule,
  • données météorologiques, telles que la vitesse et l'orientation du vent, le température, la pluviométrie, l'hygrométrie, notamment sur le trajet, le lieu de parking et/ou le lieu d'arrivée prévus,
  • conditions de circulation sur le trajet,

- données liées à l'état de charge d'une batterie, en particulier :

  • type de charge de la batterie, telle qu'une charge rapide ou une charge normale,
  • temps de charge prévu.

Egalement, l'installation comporte des moyens de gestion illustrés à la figure 4, permettant de mettre en oeuvre les deuxième et troisième niveaux de la stratégie de gestion thermique présentée en figure 2.

Ces moyens de gestion comportent un générateur de requête thermique et un estimateur de statut thermique des éléments du véhicule ainsi que des composants de l'installation permettant, à partir de données d'entrées liées à l'état des éléments du véhicule, à l'état des sources de calories ou de frigories, d'une requête d'un utilisateur et/ou d'une prédiction, de définir une requête thermique pour un ou plusieurs des éléments du véhicule à chauffer ou à refroidir.

Les requêtes thermiques des différents éléments du véhicule peuvent être déterminées en parallèle.

En réponse aux requêtes thermiques déterminées pour chaque élément du véhicule, un sélecteur de mode thermique (voir figure 4) opte pour une configuration matérielle appropriée.

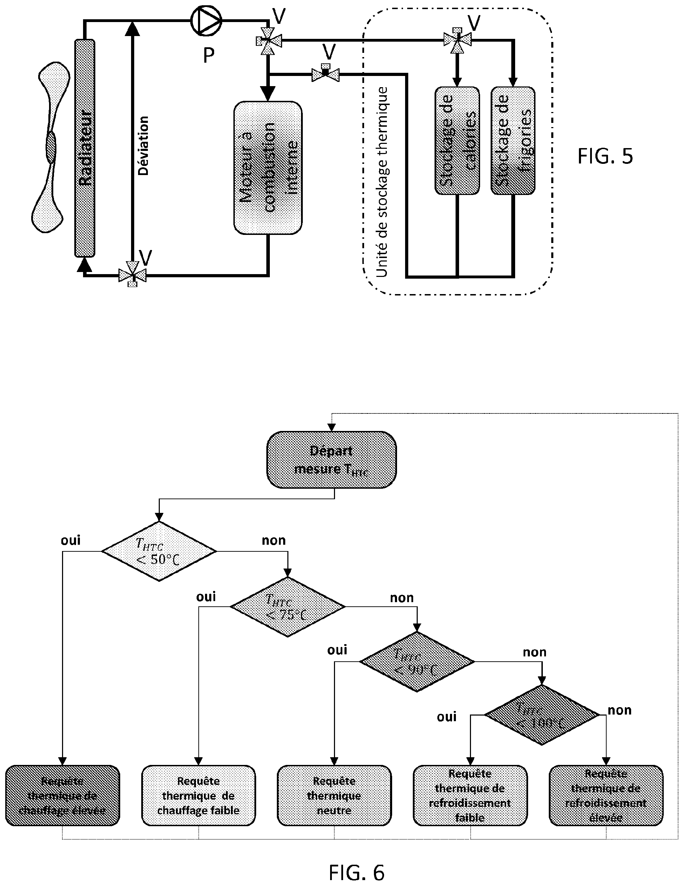

La figure 6 illustre un organigramme représentant un exemple de générateur de requête thermique pour un moteur à combustion interne, dont le circuit de refroidissement est visible sur la figure 5.

Le circuit de refroidissement du moteur à combustion interne du véhicule est intégré à l'installation décrite en référence à la figure 1. Ce circuit peut être noté HTC (pour *High Temperature Circuit*). Il comprend par exemple un radiateur, une ou plusieurs pompes P, le moteur à combustion interne et l'unité de stockage thermique comprenant un stockeur de calories et un stockeur de frigories et des vannes V à trois voies permettant de connecter l'un des stockeurs à la pompe ou de déconnecter l'unité de stockage thermique du reste du circuit de refroidissement.

Comme on peut le voir à la figure 6, les requêtes thermiques sont déterminées par rapport aux exigences thermiques du moteur à combustion interne (ici quantifié par le biais de la température du liquide de refroidissement du circuit $T_{HTC}$), afin d'assurer le fonctionnement du moteur à combustion dans des conditions thermiques optimales (entre 75°C et 90°C), comme repris dans le tableau ci-dessous:

| Requête thermique pour le moteur à combustion interne | Requête de chauffage élevée | Requête de chauffage faible | Aucune requête thermique | Requête de refroidissement faible | Requête de refroidissement élevée |
|---|---|---|---|---|---|
| Conditions thermiques du liquide de refroidissement | $T_{HTC}$ < 50°C | $T_{HTC}$ < 75°C | 75°C < $T_{HTC}$ < 90°C | 90°C < $T_{HTC}$ < 100°C | $T_{HTC}$ > 100°C |
| | Manque de chaleur | | | Excès de chaleur | |

Ainsi, en fonction de la température du liquide de refroidissement, cinq types de requêtes thermiques peuvent être définies : requête de chauffage élevée, requête de chauffage faible, requête thermique neutre, requête de refroidissement faible, requête de refroidissement élevée.

Par exemple, lors d'un démarrage à froid, la température du liquide de refroidissement du moteur étant relativement basse, une requête de chauffage élevée est émise afin d'augmenter la température du liquide de refroidissement du moteur le plus rapidement possible.

Une telle requête thermique est transmise au sélecteur de mode thermique, apte à définir un mode de fonctionnement thermique de l'installation à partir de ladite requête thermique. Le sélecteur de mode thermique permet d'utiliser les sources de calories et de frigories de sorte à modifier la température du liquide de refroidissement thermique dans l'exemple du moteur à combustion et de son circuit de refroidissement tel qu'illustré en figure 5. Egalement, le sélecteur de mode thermique peut prendre en considération les valeurs ainsi que les évènements prédits par les moyens de prédiction.

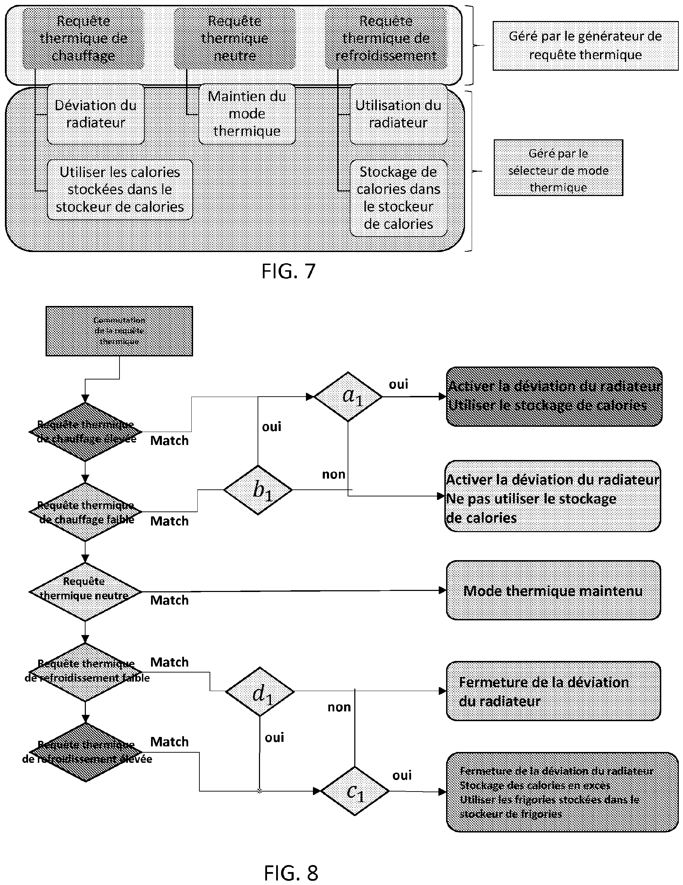

Comme l'illustre la figure 7, pour chaque requête thermique générée par le générateur de requête thermique pour le moteur à combustion interne, en fonction de la configuration du circuit de refroidissement, plusieurs solutions sont possibles pour assurer le refroidissement ou le chauffage en fonction de la requête thermique. Dans l'exemple du moteur à combustion interne, en réponse à une requête de chauffage, le sélecteur de mode thermique peut s'assurer que le liquide de refroidissement contourne le radiateur et/ou utilise les calories disponibles dans le stockeur de calories. Similairement, en réponse à une requête de refroidissement, le sélecteur de mode thermique peut s'assurer que le liquide de refroidissement passe par le radiateur et/ou utilise les frigories disponibles dans le stockeur de frigories. Le sélecteur de mode thermique choisit les meilleures options au regard de la température cible, de la température en temps réel et/ou des prédictions du système.

La figure 8 illustre un exemple d'organigramme du sélecteur de mode thermique pour le circuit de refroidissement du moteur à combustion interne. En fonction de la requête thermique, un mode de fonctionnement thermique est sélectionné configurant alors le circuit différemment.

Dans le cas où une requête de chauffage élevé est émise, alors le stockage de calories peut être utilisé en complément de la déviation du liquide de refroidissement du radiateur, si des calories sont disponibles au niveau du stockeur de calories (c'est-à-dire si la condition a1 est vraie).

Dans le cas où une requête de chauffage faible est émise, alors les calories disponibles dans le stockeur de calories ne sont pas utilisées, à moins qu'un événement conduisant à un excès de chaleur ne soit prédit lors de la période d'utilisation du véhicule (c'est-à-dire si la condition b1 est vraie).

Lorsque la température du liquide de refroidissement est satisfaisante (requête thermique neutre), le mode thermique de l'installation est maintenu ou conservé.

Dans le cas où une requête de refroidissement faible est émise, alors la déviation du radiateur est fermée par défaut. Si un événement conduisant à l'entrée excessive de froid est prédit sur la période d'utilisation du véhicule (c'est-à-dire si la condition d1 est vraie), Des frigories stockées peuvent être utilisées, dans le cas où des frigories sont disponibles au niveau du stockeur de frigories.

Dans le cas où une requête de refroidissement élevée est émise, alors l'excès de chaleur peut également être redirigé vers le stockeur de calories en combinaison avec la fermeture de la déviation du radiateur. Les frigories stockées peuvent également être utilisées (dans le cas où des frigories sont disponibles au niveau du stockeur de frigories, c'est-à-dire si la condition c1 est vraie).

Une fois le mode de fonctionnement thermique sélectionné, un contrôleur de composant (voir figure 4), met en oeuvre le troisième niveau (couche 3 - voir figure 2) de la stratégie de gestion thermique.

Le contrôleur de composant est apte à actionner des actionneurs de l'installation (vanne, ventilateur, pompes), de façon à faire fonctionner l'installation selon le mode de fonctionnement choisi.

Ainsi, le contrôleur de composants contrôle et pilote le comportement dynamique des composants constitutifs de l'installation. Il traduit, en langage binaire (0 ou 1), la configuration du circuit du mode de fonctionnement thermique sélectionné. Le contrôleur de composant peut être par exemple une implémentation d'un régulateur PID, d'un système de logique flou, ou d'un système de contrôle optimal, permettant ainsi un contrôle dynamique des composants. Par exemple, en réponse à une requête de chauffage élevée, pour les batteries du véhicule, le sélecteur de mode thermique va choisir de générer et de récupérer des calories au niveau des résistances à coefficient de température positive ou PTC. Le contrôle dynamique du deuxième niveau de la stratégie (couche 2, figure 2) est alors effectué, de sorte à contrôler activement le courant traversant les résistances électriques en fonction de l'évolution en température des batteries. Ainsi cette boucle de régulation garantit une réduction de la puissance thermique dissipée par ces résistances à mesure que la température des batteries augmente.

Ainsi, un procédé de gestion thermique d'un véhicule visant à mettre en oeuvre la stratégie de gestion thermique par une installation selon l'invention comporte les étapes consistant à :

- réaliser au moins une prédiction visant à déterminer :

  • si des calories ou des frigories seront disponibles ultérieurement, au niveau de l'une desdites sources et/ou,
  • si un besoin en calories ou en frigories existera ultérieurement au niveau de l'un desdits éléments à chauffer ou à refroidir.

- distribuer les calories ou les frigories disponibles au niveau des sources aux éléments à chauffer ou à refroidir, en fonction des besoins, notamment en fonction de ladite prédiction.

Bien entendu, la stratégie de gestion thermique mise en oeuvre par l'installation de gestion thermique selon l'invention permet de gérer thermiquement tous les éléments du véhicule nécessitant d'être refroidis ou d'être chauffés, tels par exemple que la batterie, l'habitacle et l'électronique de puissance embarquée (moteur électrique, onduleur et convertisseurs de puissance). Il est également possible qu'au moins une source de calories et/ou de frigories forme également un élément à chauffer ou à refroidir, en fonction des conditions de fonctionnement du véhicule.

Par exemple, dans le cas particulier des batteries, celles-ci peuvent être aptes à former une source de calories ou de frigories et/ou aptes à former un élément à chauffer ou à refroidir. En effet, lorsqu'elles dégagent de la chaleur, une partie des calories créées peuvent être stockées dans des stockeurs de calories de l'installation selon l'invention. Egalement, lorsque leur température est faible, une partie des frigories peut être transférée vers les stockeurs de frigories de l'installation.

La batterie peut être montée dans un boîtier logeant un matériau à changement de phase apte à stocker des calories et/ou des frigories.

Comme dans le cas du moteur à combustion, l'installation thermique mettant en oeuvre la stratégie de gestion thermique est configurée de sorte à garantir une température optimale de fonctionnement des batteries.

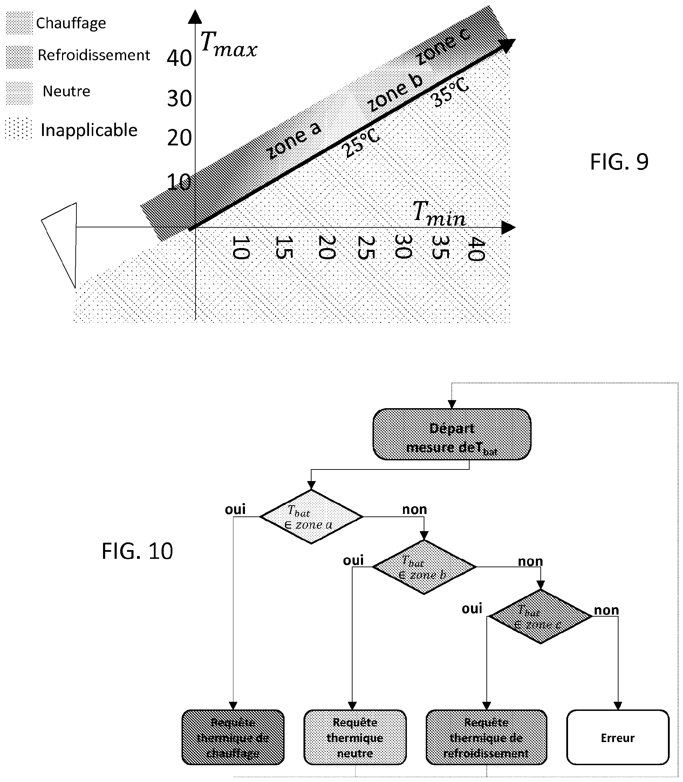

Comme cela est visible sur la figure 9 en lien avec la figure 10, la gamme de température entre 25°C et 35°C permet un fonctionnement optimal des batteries. Au-delà de la température de 40°C, les batteries se détériorent. Pour s'assurer un fonctionnement optimal des batteries, il est possible de surveiller individuellement plusieurs zones de la batterie, de sorte qu'aucune de ces zones n'ait une température supérieure à 40°C.

Comme on peut le voir sur la figure 10, le générateur de requête thermique prend en considération les risques de détérioration de sorte qu'aucune des zones de la batterie n'ait une température Tbat supérieure à la température critique de 40°C. Les requêtes thermiques sont établies en fonction des états des capteurs de température dédiés à chaque zone.

On définit respectivement par Tmin et Tmax la température minimale et la température maximale mesurées par les différents capteurs de températures des différentes zones, à un instant donné.

A tout instant, la différence entre Tmax et Tmin ne doit pas excéder 10°C. Dans le cas contraire, il sera constaté un dysfonctionnement de l'installation, due par exemple à une défaillance de l'un des capteurs de température ou une mal-conception du bloc batterie.

Une requête de chauffage est émise lorsque les températures Tmin et Tmax sont respectivement, inférieures à 25°C et 35°C (zone a).

Aucune requête thermique n'est émise si Tmin est comprise entre 25°C et 35°C et si Tmax est inférieure à 40°C (zone b).

Une requête de refroidissement est émise si Tmin est supérieur à 35°C et/ou si Tmax est supérieur à 40°C (indépendamment de Tmin - zone c).

En réponse au type de requête thermique émise, le sélecteur de modes de fonctionnement thermique configure l'installation selon l'invention.

Dans le cas des batteries, les requêtes de chauffage sont généralement rencontrées lors du démarrage à froid du véhicule, ou lorsque l'on commute de l'utilisation du moteur thermique à l'utilisation des batteries par temps froid.

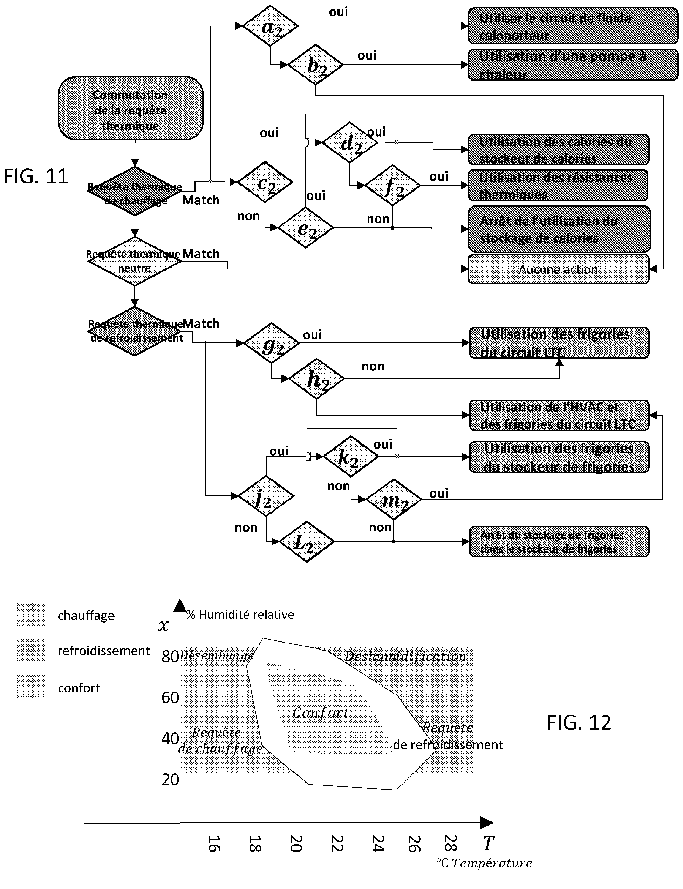

Comme illustré à la figure 11, dans le cas d'une requête thermique de chauffage pour la batterie, le sélecteur de mode thermique vérifie si :

- les circuits de fluide caloporteur et/ou de fluide frigorigène fournissent suffisamment de calories (condition a2) : dans le cas où ces circuits ne transportent pas assez de chaleur (c'est-à-dire si la condition a2 est fausse, par exemple lorsque le moteur à combustion ne fonctionne pas), le sélecteur vérifie si le niveau d'énergie disponible via la batterie ou via le carburant disponible dans le véhicule (condition b2) est suffisant pour assurer le chauffage via le circuit de fluide frigorigène et le mode de fonctionnement de type pompe à chaleur, ou par l'intermédiaire des résistances électrique.

  La vérification du niveau d'énergie consiste classiquement à s'assurer qu'au moins 30% de la capacité maximale des batteries $SoC_{max}^{bat}$ est disponible. Cette vérification peut également prendre en compte l'estimation de ce niveau d'énergie une fois arrivé à destination. En utilisant une telle prédiction, la condition de niveau d'énergie b2 doit se baser sur l'estimation en temps-réel de la distance de conduite restante et/ou de la distance nécessaire pour atteindre le prochain lieu de recharge de la batterie ou de remplissage du réservoir de carburant.

- le démarrage de véhicule est réalisé à froid (condition c2) : dans le cas où le véhicule est démarré à froid (la condition c2 est vraie), les calories disponibles au niveau du stockeur de calories (si des calories sont disponibles, c'est-à-dire si la condition d2 est vraie) sont utilisées pour augmenter rapidement la température de la batterie, afin d'assurer un démarrage rapide dans de bonnes conditions. S'il n'y a pas de calories disponibles au niveau du stockeur de calories (c'est-à-dire si la condition d2 est fausse), les résistances électriques sont alors utilisées si le niveau de charge des batteries (ou bien le niveau du carburant) est suffisant (c'est-à-dire si la condition f2 est vraie). Similairement à ce qui a été décrit en relation avec le moteur à combustion interne, si un excès de chaleur est prédit (c'est-à-dire si la condition e2 est vraie), alors les calories stockées peuvent être utilisées pour d'autres situations de fonctionnement que le démarrage à froid.

  S'il n'y a pas de prédiction d'un excès de chaleur (c'est-à-dire si la condition e2 est fausse), alors l'utilisation de calories stockées est suspendue.

Dans le cas d'une requête thermique neutre, pour la batterie, le sélecteur de mode thermique ne commande aucun échange thermique entre la batterie et les sources de calories ou de frigories.

Il est possible de prévoir un refroidissement des batteries dans les conditions suivantes : temps très chaud, mode de charge rapide, charge importante embarquée dans le véhicule.

Dans le cas d'une telle requête de refroidissement, on utilise par défaut un circuit de fluide caloporteur noté LTC (pour *Low Temperature Circuit*). Le circuit LTC vise à refroidir notamment le moteur électrique du véhicule ou encore la batterie. La température du fluide caloporteur dans le circuit LTC est plus faible que dans le circuit HTC. A titre d'exemple, la température du fluide caloporteur du circuit HTC est comprise entre 75 et 90°C tandis que la température du fluide caloporteur dans le circuit LTC est comprise entre 20 et 70°C.

Si le fluide caloporteur du circuit LTC n'est pas à une température suffisamment faible (c'est-à-dire si la condition g2 est fausse), le sélecteur de mode thermique choisit d'utiliser le dispositif de chauffage, ventilation et/ou de conditionnement (également appelé HVAC pour *Heating, Ventilation and Air Conditioning*) si le niveau de charge de batterie le permet (c'est-à-dire si la condition h2 est vraie). Pour un refroidissement des batteries dans des conditions transitoires d'un démarrage à chaud (c'est-à-dire si la condition j2 est vraie), le sélecteur de mode thermique utilise par défaut les frigories disponibles dans le stockeur de frigories. Dans le cas où les frigories disponibles dans le stockeur de frigories ne sont pas suffisantes (c'est-à-dire si la condition k2 est fausse), le dispositif de chauffage, ventilation et/ou de conditionnement est utilisé si le niveau de charge de la batterie le permet (c'est-à-dire si la condition m2 est vraie). Si un excès de froid est prédit (c'est-à-dire si la condition l2 est vraie), le sélecteur de mode thermique peut permettre d'utiliser le stockeur de frigories dans tous les cas (c'est-à-dire même en dehors d'un démarrage à chaud).

Dans le cas particulier de la gestion thermique de l'habitacle, un dispositif de chauffage, ventilation et/ou de conditionnement d'un habitacle est compris dans l'installation et est paramétré pour gérer la température de l'habitacle. La gestion de la température de l'habitacle est effectuée de sorte à assurer des conditions de température et d'humidité dans l'habitacle pour garantir le confort des passagers. Comme on peut le voir sur la figure 12, le confort est assuré dès lors que la température de l'habitacle est comprise entre 18°C et 26°C et que l'humidité est comprise entre 30 et 80 %. La température et l'humidité sont mesurées dans l'habitacle par le biais de capteurs de température et d'humidité. Le dispositif de chauffage, ventilation et/ou de conditionnement d'un habitacle (HVAC), dédié à l'habitacle du véhicule, comprend, comme illustré à la figure 1 :

- un circuit de fluide frigorigène 2,
- un circuit de fluide caloporteur 1,
- un échangeur de chaleur E2 apte à échanger de la chaleur entre le fluide caloporteur et de l'air destiné à déboucher dans l'habitacle du véhicule,
- un échangeur de chaleur E4 apte à échanger de la chaleur entre le fluide frigorigène et de l'air destiné à déboucher dans l'habitacle du véhicule et apte à former un condenseur,
- un échangeur de chaleur E6 apte à échanger de la chaleur entre le fluide frigorigène et de l'air destiné à déboucher dans l'habitacle du véhicule et apte à former un évaporateur,
- au moins un échangeur de chaleur E1 apte à échanger de la chaleur entre le fluide frigorigène et le fluide caloporteur,
- les moyens de contrôle étant aptes à distribuer les calories ou les frigories entre les sources et les éléments à chauffer et/ou à refroidir, au travers du circuit de fluide frigorigène 2, du circuit de fluide caloporteur 1 et/ou desdites échangeurs E1, E2, E4, E6.

Le dispositif de chauffage, ventilation et/ou de conditionnement de l'habitacle peut également comprendre un échangeur de chaleur apte à échanger de la chaleur entre le fluide caloporteur ou le fluide frigorigène, d'une part et des gaz chauds issus d'une ligne d'échappement du véhicule, d'autre part.

Ainsi, la batterie, les stockeurs de calories et/ou de frigories et, de manière générale, toutes les sources de calories ou de frigories du véhicule sont aptes à échanger de la chaleur avec le fluide caloporteur.

Dans le cas de l'habitacle, les requêtes thermiques sont formulées au regard du confort du passager, en prenant en compte à la fois la température de l'habitacle mais également le niveau d'humidité.

Les requêtes thermiques sont définies en fonction des données suivantes :

- la différence de température entre la température de l'habitacle Tc et la température souhaitée par l'utilisateur Tu;
- l'humidité mesurée dans l'habitacle xc ;
- la température ambiante Tam.

Dans un régime de fonctionnement nominal, les sources de calories utilisées pour chauffer l'habitacle, sont les suivantes (par ordre de priorité et sous condition de disponibilité) : le circuit de refroidissement du moteur thermique HTC et la pompe à chaleur. Dans un régime de fonctionnement transitoire, les sources de calories utilisées pour chauffer l'habitacle, sont les suivantes (par ordre de priorité et sous condition de disponibilité) : le stockeur de calories et les résistances à coefficient de température positive (PTC).

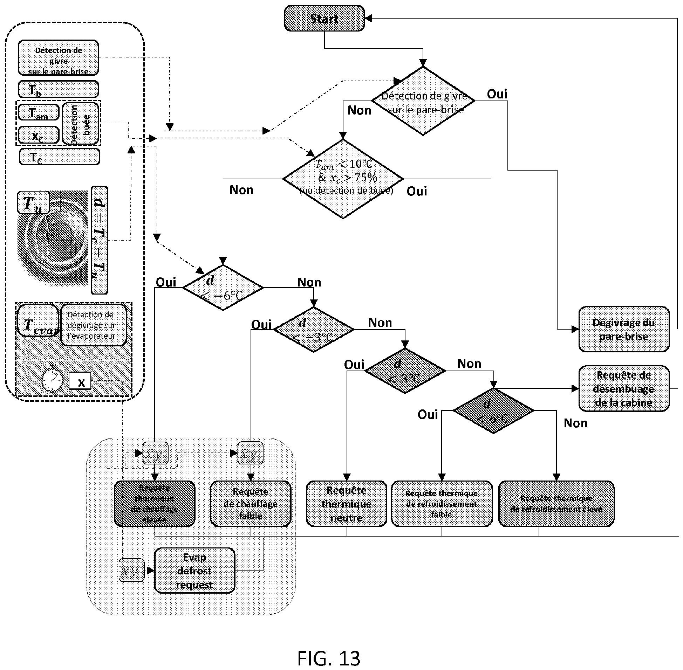

Les requêtes thermiques sont définies, telles que visibles sur la figure 13 illustrant comme indiqué dans le tableau ci-après :

| Requêtes thermiques pour l'habitacle | Requête de chauffage élevée | Requête de chauffage faible | Aucune requête thermique | Requête de refroidissement faible | Requête de refroidissement élevée |
|---|---|---|---|---|---|
| Conditions d'humidité et de température | $T_C - T_U < -6°C$ | $-6°C < T_C - T_U < 3°C$ | $T_C = T_U \pm 3$ | $3°C < T_C - T_U < 6°C$ | $T_C - T_U > 6°C$ |

Des requêtes thermiques particulières sont définies dans les cas suivants :

- désembuage du pare-brise : lorsque le taux d'humidité dans l'habitacle est élevé ou lorsque la température externe est basse, de la buée apparaît sur le pare-brise. Le désembuage peut être demandé par l'utilisateur ou demandé automatiquement lorsque *Tamb < 16°C* et que *xc* > 75%, ou que de la buée est détectée optiquement par un capteur optique.
- dégivrage du pare-brise : le dégivrage est activé soit par détection du givre sur le pare-brise, soit suite à une demande de l'utilisateur du véhicule.

- couche de givre au niveau de l'évaporateur externe de l'installation (voir par exemple échangeur E5 à la figure 1) : une demande de dégivrage de l'évaporateur est réalisée cycliquement ou en fonction de la température de l'évaporateur. Le givre présent sur l'évaporateur peut réduire l'efficacité globale de l'installation.

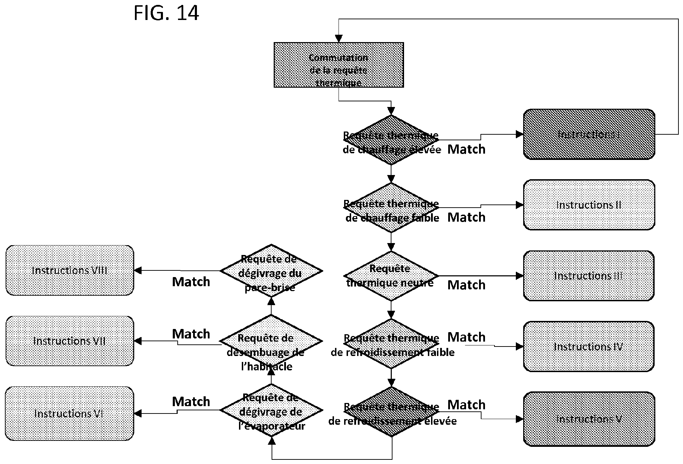

La figure 13 illustre le générateur de requête thermique pour gérer thermiquement l'habitacle du véhicule, tel que décrit précédemment. La sélection de huit types de requêtes thermiques est illustrée par la figure 14, illustrant le sélecteur de modes thermiques. Comme on peut le voir, la sélection se fait au regard de données d'entrées pouvant être issues de capteurs analogiques et/ou numériques, du tableau de bord du véhicule, ou encore des événements.

En priorité, le générateur de requête thermique analyse si du givre ou de la buée est détectée sur le pare-brise. Une telle détection est réalisée automatiquement par le biais de capteurs (de température et/ou d'humidité et/ou optique). En cas de détection de buée et/ou de givre, une requête de dégivrage et/ou de déshumidification est émise. Dans le cas inverse l'algorithme détermine les besoins thermiques de l'habitacle du véhicule.

La sélection de la requête thermique se fait sur la base de la valeur de la différence entre la température de l'habitacle et la température souhaitée. En fonction de l'importance de cet écart, les cinq demandes thermiques sont échelonnées de la demande de chauffage élevé à la demande de refroidissement élevée, comme indiqué précédemment.

Lorsque le chauffage est requis, le dégivrage de l'évaporateur peut être nécessaire lors de l'utilisation du dispositif de chauffage, ventilation et/ou conditionnement d'un habitacle du véhicule surtout en mode pompe à chaleur. La requête thermique de chauffage est alors mise en suspens et une requête de dégivrage de l'évaporateur est formulée et maintenue en fonction de paramètres tels que la température de l'évaporateur, le signal issu du capteur optique et/ou pendant un cycle de temps prédéfini.

Lorsque le refroidissement est requis (faible ou élevé), il est possible, pour déshumidifier l'air de l'habitacle (lors de la présence de buée dans l'habitacle), de réduire la température de l'air soufflé à l'intérieur de l'habitacle à une température inférieure aux températures de la plage de confort. Pour revenir à une température de confort, le chauffage est requis, afin de réchauffer l'air suite à la réduction d'humidité.

Les requêtes de dégivrage de l'évaporateur et de déshumidification sont émises et gérées automatiquement par le générateur de requête thermique, au regard des données mesurées et des événements.

Ainsi, pour l'habitacle, huit requêtes thermiques sont définies :

- requête thermique de chauffage élevée ;
- requête thermique de chauffage faible ;
- requête thermique neutre ;
- requête thermique de refroidissement élevé ;
- requête thermique de refroidissement faible ;
- requête de déshumidification de l'habitacle ;
- requête de dégivrage du pare-brise ;
- requête de dégivrage de l'évaporateur.

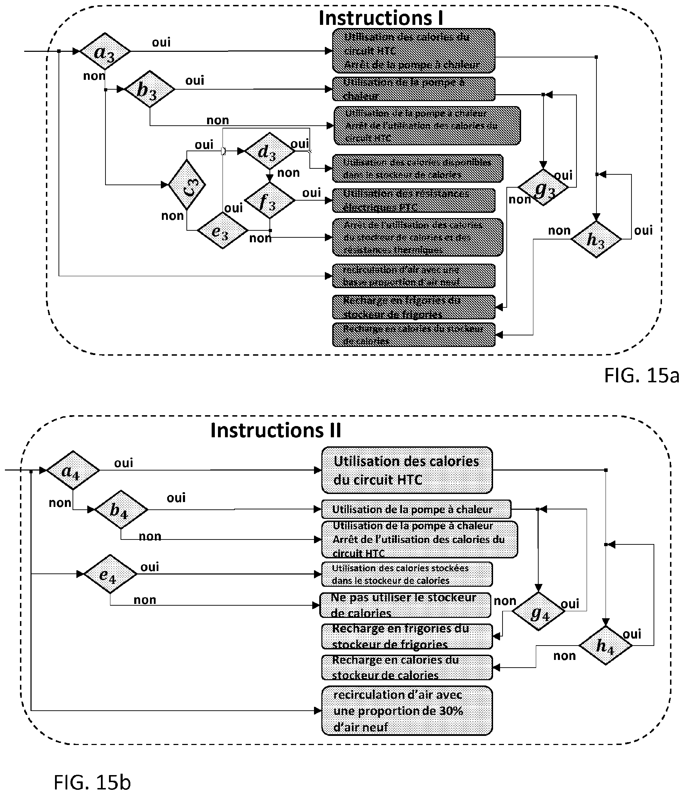

En réponse à chaque requête, le sélecteur de mode thermique associe à chaque requête thermique un ensemble d'instructions configurant des modes de fonctionnement de l'installation selon l'invention. L'architecture globale de l'algorithme du sélecteur de mode thermique pour les requêtes thermiques de l'habitacle est illustrée sur la figure 14. Les instructions sont quant à elles illustrées sur les figures 15a à 15h.

En réponse à une requête de chauffage élevée (Figure 15a), la recirculation d'air est favorisée pour réduire la charge thermique. Lors d'un mode de fonctionnement transitoire, cette décision est établie pour une courte période (c'est à dire pour une période de maximum 10 min), le temps nécessaire pour atteindre les conditions climatiques d'un mode de fonctionnement nominal. Le sélecteur privilégie l'utilisation des calories du circuit HTC, après avoir vérifié que la température du liquide de refroidissement est suffisamment élevée (c'est-à-dire si la condition a3 est vraie). Si les calories disponibles au niveau du circuit HTC ne sont pas suffisantes ou ne sont pas disponibles (c'est-à-dire si la condition a3 est fausse), le sélecteur commute de sorte que les sources électriques soient utilisées. Le niveau de charge des batteries (et/ou le niveau du carburant) est vérifié au regard de la distance de conduite restante évaluée par les moyens de prédiction, de sorte à utiliser la pompe à chaleur et/ou les résistances à coefficient de température positive (PTC). Ces deux options sont utilisées lorsque le niveau de l'énergie et l'autonomie disponible sont élevés ou lorsque le véhicule est branché au réseau électrique (c'est-à-dire si la condition b3 est vraie ou si la condition f3 est vraie).

Lorsque les calories du circuit HTC sont disponibles et sont utilisées, le sélecteur de mode thermique envoie les instructions de façon à stocker un excès de calories dans le stockeur de calories si le niveau de celui-ci est bas (c'est-à-dire si la condition h3 est fausse).

Si la pompe à chaleur est utilisée, le froid généré au niveau de l'évaporateur peut être stocké dans le stockeur de frigories si celui présente un niveau bas (c'est-à-dire si la condition g3 est fausse).

Dans le cas d'un mode de fonctionnement transitoire tel que le démarrage du véhicule à froid (c'est-à-dire si la condition c3 est vraie), pour permettre un ajustage rapide de la température de l'habitacle, le sélecteur de mode thermique utilise le stockeur de calories en tant que source supplémentaire de calories. Si le niveau de calories du stockeur de calories n'est pas suffisant (c'est-à-dire si la condition d3 est fausse), les résistances électriques sont alors utilisées si le niveau de charge de batterie et/ou si le niveau de carburant le permet et/ou si le véhicule est branché au réseau électrique (c'est-à-dire si la condition f3 est vraie).

Lorsqu'un excès de chaleur est prédit, le sélecteur de mode thermique permet aux calories disponibles dans le stockeur de calories d'être utilisées en dehors de la situation transitoire tel qu'un démarrage à froid (c'est-à-dire si la condition e3 est vraie).

Comme illustré à la figure 15b, en réponse à une requête de chauffage faible, on utilise une logique proche de celle appliquée à une requête de chauffage élevée (figure 15a). Néanmoins, contrairement à ce qui est appliqué à une requête de chauffage élevée, la situation du démarrage à froid n'est pas applicable. De plus, on notera que, la recirculation d'air n'est que partielle. Le débit d'air utilisé peut être par exemple composé à environ 70% d'air recyclé et à 30% d'air neuf, c'est-à-dire d'air extérieur à l'habitacle.

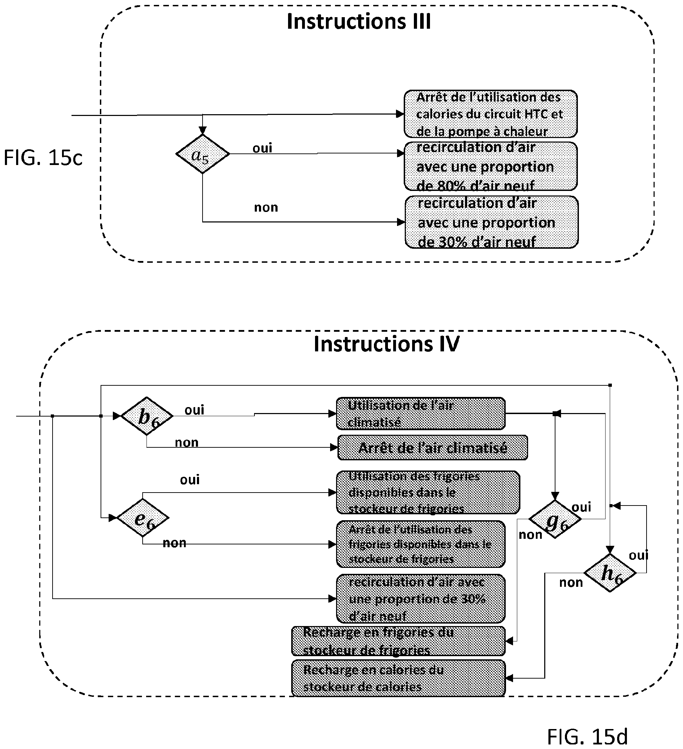

Dans le cas d'une requête thermique neutre, dont les instructions sont visibles à la figure 15c, ni le circuit HTC, ni le dispositif de chauffage, ventilation et/ou conditionnement ne sont utilisés par défaut. Le sélecteur envoie des instructions pour contrôler si la température ambiante (à l'extérieur du véhicule) est proche de la température souhaitée par l'usager du véhicule (c'est-à-dire si la condition a5 est vraie). La proportion d'air neuf (c'est-à-dire extérieur à l'habitacle) introduit dans l'habitacle varie en fonction de la différence entre la température ambiante et la température cible de l'habitacle (si cette différence est inférieure ou supérieure à 2°C - c'est-à-dire si la condition a5 est vraie).

Dans le cas d'une requête de refroidissement faible et comme illustré à la figure 15d, par défaut, si le niveau de calories du stockeur de calories n'est pas égal à 100% (c'est-à-dire si la condition h6 est fausse), alors le stockeur de calories est rechargé.

Le mode de climatisation est activé si le niveau d'énergie le permet (c'est-à-dire si la condition b6 est vraie). La recirculation d'air est moins utilisée. Le seuil d'énergie permettant l'utilisation de l'air conditionné est défini en fonction de la prédiction de la distance de conduite restante pour atteindre la destination et/ou la station de recharge suivante. En parallèle, si le niveau du stockeur de frigories n'est pas égal à 100% (c'est-à-dire si la condition g6 est fausse), alors le stockeur de frigories est rechargé.

Si un excès de frigories est prédit (c'est-à-dire si la condition e6 est vraie), alors les frigories disponibles au niveau du stockeur de frigories sont utilisées.

Lorsqu'un excès de frigories est prédit (c'est-à-dire si la condition e6 est vraie), le sélecteur de mode thermique envoie des instructions permettant d'utiliser les frigories disponibles au niveau du stockeur de frigories en dehors du cas particulier d'un démarrage du véhicule à chaud.

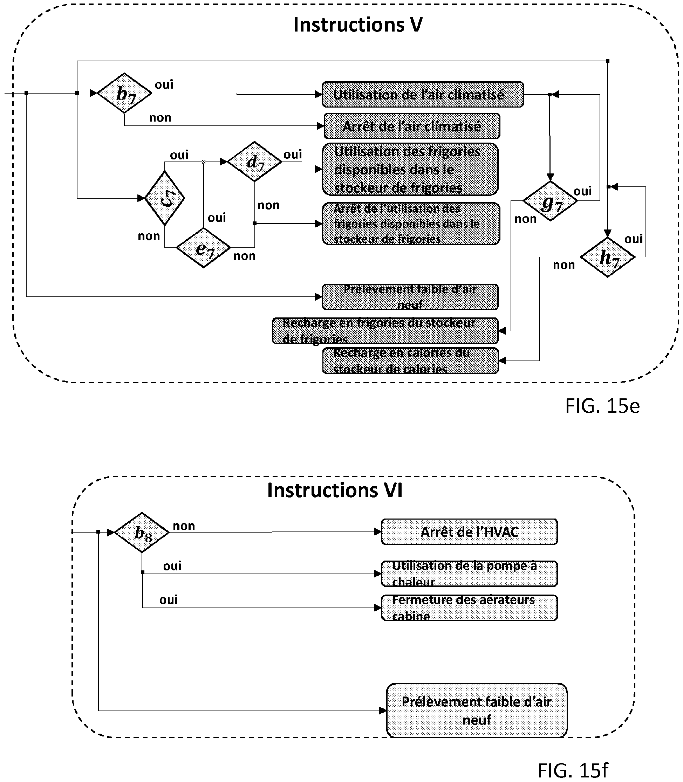

En réponse une requête de refroidissement élevée et comme illustré à la figure 15e, par défaut, si le niveau de calories du stockeur de calories n'est pas égal à 100% (c'est-à-dire si la condition h7 est fausse), alors le stockeur de calories est rechargé.

Par défaut, la recirculation d'air est utilisée et, si le niveau d'énergie le permet (condition b7 est vraie), l'air conditionné est utilisé. En parallèle, si le niveau du stockeur de frigories n'est pas égal à 100% (c'est-à-dire si la condition g7 est fausse), alors le stockeur de frigories est rechargé. Si des frigories sont disponibles au niveau du stockeur de frigories (c'est-à-dire si la condition d7 est vraie), alors le stockeur de frigories est utilisé en complément de l'air conditionné pour surmonter une charge transitoire lors d'un démarrage à chaud (c'est-à-dire si la condition c7 est vraie). Si un excès de frigories est prévu (c'est-à-dire si la condition e7 est vraie), alors les frigories disponibles dans le stockeur de frigories sont utilisées.

Dans le cas d'une requête de dégivrage de l'évaporateur et comme illustré à la figure 15f, par défaut, un faible débit d'air neuf est introduit dans l'habitacle du véhicule. Si le niveau de charge de la batterie est suffisant (c'est-à-dire si la condition b8 est vraie), alors la pompe à chaleur démarre ou continue à fonctionner et les aérateurs situés en face avant du tableau de bord sont fermés de façon à diriger la majeure partie de l'air chaud en direction du pare-brise.

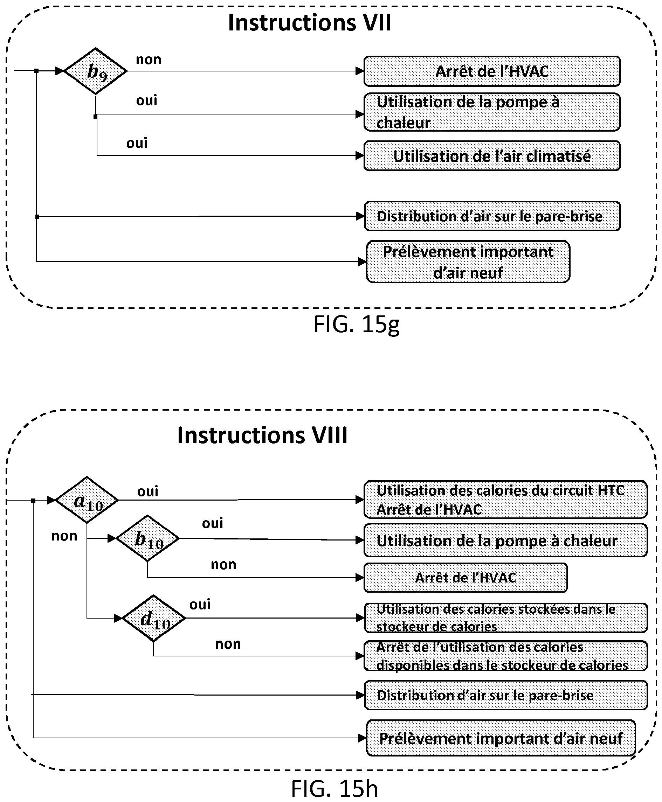

Dans le cas d'une requête de déshumidification de l'habitacle (c'est-à-dire de désembuage), comme illustré à la figure 15g, le dispositif de chauffage, ventilation et/ou conditionnement est utilisé dans les deux modes, de refroidissement (air conditionné) et de chauffage (pompe à chaleur). L'évaporateur a pour rôle de réduire l'humidité tandis que le condenseur réchauffe l'air à une température confortable. Une plus grande prise d'air frais (extérieur) peut être réglée ainsi que d'une distribution de l'air de sorte à cibler les pare-brises avant et arrière. Ces actions sont néanmoins conditionnées à un niveau d'énergie élevée, c'est-à-dire un niveau de charge des batteries élevé et/ou un niveau de carburant élevé ou le véhicule branché sur une recharge (condition b9 est vraie). Le niveau d'énergie peut être évalué au regard de la destination prédite.

Dans le cas d'une requête de dégivrage du pare-brise, comme illustré à la figure 15h, les calories du circuit HTC sont utilisées si elles sont disponibles (c'est-à-dire si la condition a10 est vraie). Si ces calories ne sont pas disponibles, la pompe à chaleur est activée si le niveau d'énergie le permet (c'est-à-dire si la condition b10 est vraie). Le niveau d'énergie peut être évalué au regard de la destination prédite. Le stockeur de calories peut être utilisé pour augmenter la température, si des calories sont disponibles (c'est-à-dire si la condition d10 est vraie). Par ailleurs, par défaut, le sélecteur de mode thermique génère une distribution d'air sur le pare-brise ainsi qu'un prélèvement important d'air neuf, de façon à abaisser le taux d'humidité.

Les instructions du sélecteur de mode thermique sont envoyées au contrôleur de composants pour configurer le fonctionnement de l'installation selon l'invention en réponse à la requête thermique.

Dans le cas du conditionnement thermique de l'électronique de puissance, seules deux requêtes thermiques peuvent être émises par le générateur de requêtes thermiques :

- requête neutre, et ceci par défaut,
- requête de refroidissement lorsque la température de l'électronique de puissance du véhicule est supérieure à 40°C.

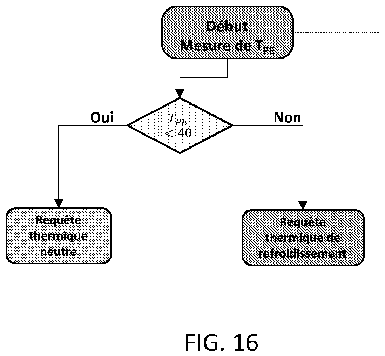

L'organigramme du générateur de requête thermique est illustré à la figure 16, où la condition de la température TPE permet d'émettre, soit une requête neutre, soit une requête de refroidissement.

Dans le cas d'une requête thermique de refroidissement de l'électronique de puissance, le circuit LTC est utilisé pour transporter les calories dissipées par l'électronique de puissance. En réponse à une requête thermique neutre, le refroidissement par le biais du circuit LTC est interrompu.

## Revendications

1. Installation de gestion thermique d'un véhicule comportant :

   - au moins un stockeur de calories et/ou de frigories (S1, S2) formant une source de calories ou de frigories,
   - au moins un élément (M1, M2, M3) du véhicule à chauffer ou à refroidir,
   - au moins une source additionnelle (M1, M2, M3, RE1, RE2, RE3) de calories ou de frigories,
   - des moyens de détection aptes à détecter si des calories ou des frigories sont disponibles au niveau de l'une desdites sources,
   - des moyens de contrôle-commande aptes à distribuer les calories ou les frigories disponibles au niveau des sources aux éléments à chauffer ou à refroidir, en fonction des besoins transitoires ou nominaux, comportant des moyens de prédiction aptes à réaliser au moins une prédiction visant à déterminer :

     • si des calories ou des frigories seront disponibles ultérieurement, au niveau de l'une desdites sources et/ou,
     • si un besoin en calories ou en frigories existera ultérieurement au niveau de l'un desdits éléments à chauffer ou à refroidir. et en ce qu'elle comporte des moyens de gestion aptes à :

       - définir un besoin thermique pour un ou plusieurs des éléments du véhicule à chauffer ou à refroidir et/ou un besoin électrique pour un ou plusieurs des éléments du véhicule à alimenter électriquement, à partir de données d'entrées liées à l'état des éléments du véhicule à chauffer ou à refroidir, à l'état des sources de calories ou de frigories, d'une requête d'un utilisateur et/ou d'une prédiction,
       - définir un mode de fonctionnement de l'installation à partir dudit besoin thermique, dudit besoin électrique et/ou d'une prédiction,
       - actionner des actionneurs de l'installation, de façon à faire fonctionner l'installation selon le mode de fonctionnement choisi, **caractérisé en ce que** l'installation met en oeuvre une stratégie de gestion thermique hiérarchisée en trois niveaux de contrôle, à savoir

         - un premier niveau dédié à la prédiction pour optimiser la gestion thermique de l'installation, ladite prédiction étant basée sur un modèle et/ou des données collectées qui sont traitées par des algorithmes d'apprentissage et/ou des techniques d'intelligence artificielle, permettent d'obtenir un modèle du système, à savoir le véhicule et en particulier les éléments à refroidir et à chauffer ainsi que l'installation de gestion thermique,
         - un deuxième niveau définissant la gestion thermique de l'installation en temps réel, le deuxième niveau de stratégie sélectionnant un mode thermique adapté et optimisé pour garantir le bon fonctionnement des éléments de l'installation et du véhicule en prenant en considération l'état thermique des éléments de l'installation et du véhicule en temps réel, ainsi que les données de prédiction du premier niveau,
         - un troisième niveau définissant des lois de commande d'activation ou de désactivation d'actionneurs sélectionnés de l'installation en fonction du mode thermique sélectionné au deuxième niveau.

2. Installation selon la revendication 1, **caractérisée en ce que** les moyens de prédiction sont aptes à calculer la disponibilité ultérieure des calories et/ou des frigories, et/ou les besoins ultérieurs en calories et/ou frigories à partir d'au moins une des données d'entrées suivantes :

- données liées aux habitudes et/ou aux préférences de confort de l'utilisateur, en particulier :

  • données liées à la température de l'habitacle du véhicule habituellement souhaitée par l'utilisateur,
  • débit d'air habituellement souhaité par l'utilisateur dans l'habitacle,
  • répartition du débit d'air habituellement souhaitée par l'utilisateur dans l'habitacle, entre différents points d'entrée de l'air dans l'habitacle, tels que des aérateurs,
  • répartition entre l'air neuf extérieur à l'habitacle et l'air recyclé issu de l'habitacle, habituellement souhaitée par l'utilisateur,
  • orientation des aérateurs habituellement souhaitée par l'utilisateur,

- données liées aux habitudes et/ou aux préférences de conduite de l'utilisateur, en particulier :

  • données liées à la vitesse du véhicule,
  • temps de roulage du véhicule,
  • temps d'arrêt du véhicule,
  • accélération du véhicule,
  • régime d'un moteur thermique ou électrique du véhicule,

- données liées au trajet de l'utilisateur, en particulier :

  • coordonnées géographiques du lieu de départ et/ou du lieu d'arrivée prévu ou fourni par l'utilisateur,
  • coordonnées géographiques en temps réel du véhicule,
  • données météorologiques, telles que la vitesse et l'orientation du vent, la température, la pluviométrie, l'hygrométrie, notamment sur le trajet, le lieu de parking et/ou le lieu d'arrivée prévus,
  • conditions de circulation sur le trajet,
  • probabilité que l'utilisateur se connecte à une borne de recharge électrique de la batterie électrique du véhicule dans une période de temps donnée,

- données liées à l'état de santé de la batterie,
- données liées à l'état de charge d'une batterie, en particulier :

  • type de charge de la batterie, telle qu'une charge rapide ou une charge normale,
  • temps de charge prévu.

3. Installation selon la revendications 1 ou 2, **caractérisée en ce qu'**au moins une source de calories et/ou de frigories forme également un élément à chauffer ou à refroidir, en fonction des conditions de fonctionnement du véhicule.

4. Installation selon l'une des revendications 1 à 3, **caractérisée en ce qu'**elle comporte au moins un stockeur de calories (S1) et au moins un stockeur de frigories (S2).

5. Installation selon l'une des revendications 1 à 4, **caractérisée en ce qu'**elle comporte au moins une batterie apte à former une source de calories ou de frigories et/ou apte à former un élément à chauffer ou à refroidir.

6. Installation selon la revendication 5, **caractérisée en ce que** la batterie est montée dans un boîtier logeant un matériau à changement de phase apte à stocker des calories et/ou des frigories.

7. Installation selon l'une des revendications 1 à 6, **caractérisée en ce qu'**elle comporte un dispositif de chauffage, ventilation et/ou conditionnement d'un habitacle du véhicule, comprenant :

  - un circuit de fluide frigorigène (2),
  - un circuit de fluide caloporteur (1),
  - un premier échangeur de chaleur (E2) apte à échanger de la chaleur entre le fluide caloporteur et de l'air destiné à déboucher dans l'habitacle du véhicule,
  - un deuxième échangeur de chaleur (E4) apte à échanger de la chaleur entre le fluide frigorigène et de l'air destiné à déboucher dans l'habitacle du véhicule et apte à former un condenseur,
  - un troisième échangeur de chaleur (E6) apte à échanger de la chaleur entre le fluide frigorigène et de l'air destiné à déboucher dans l'habitacle du véhicule et apte à former un évaporateur,
- au moins un quatrième échangeur de chaleur (E1) apte à échanger de la chaleur entre le fluide frigorigène et le fluide caloporteur,
- les moyens de contrôle étant aptes à distribuer les calories ou les frigories entre les sources et les éléments à chauffer refroidir, au travers du circuit de fluide frigorigène, du circuit de fluide caloporteur et/ou desdites échangeurs.

8. Installation selon la revendication 7, **caractérisée en ce que** le dispositif de chauffage, ventilation et/ou conditionnement comporte un cinquième échangeur de chaleur apte à échanger de la chaleur entre le fluide caloporteur ou le fluide frigorigène, d'une part, et des gaz chauds issus d'une ligne d'échappement du véhicule, d'autre part.

9. Installation selon la revendication 5 et selon l'une des revendications 7 ou 8, **caractérisée en ce que** la batterie est apte à échanger de la chaleur avec le fluide caloporteur.

10. Installation selon l'une des revendications 1 à 9, **caractérisée en ce que** le stockeur est apte à échanger de la chaleur avec le fluide caloporteur.

11. Installation selon l'une des revendications 1 à 10, **caractérisée en ce qu'**elle comporte des moyens de gestion aptes à utiliser un éventuel surplus d'énergie électrique contenu dans la batterie véhicule, déterminé en fonction de la prédiction réalisée, pour alimenter un réseau électrique intelligent extérieur au véhicule.

12. Procédé de gestion thermique d'un véhicule comportant une installation selon l'une des revendications 1 à 11, caractérisé en en ce qu'il comporte les étapes consistant à :

- réaliser au moins une prédiction visant à déterminer :

• si des calories ou des frigories seront disponibles ultérieurement, au niveau de l'une desdites sources et/ou,
• si un besoin en calories ou en frigories existera ultérieurement au niveau de l'un desdits éléments à chauffer ou à refroidir.

- distribuer les calories ou les frigories disponibles au niveau des sources aux éléments à chauffer ou à refroidir, en fonction des besoins, notamment en fonction de ladite prédiction.

**Patentansprüche**

1. Thermomanagementsystem für ein Fahrzeug, enthaltend:

- zumindest einen Wärme- und/oder Kältespeicher (S1, S2), der eine Wärme- oder Kältequelle bildet,
- zumindest ein zu beheizendes oder zu kühlendes Element (M1, M2, M3) des Fahrzeugs,
- zumindest eine zusätzliche Wärme- oder Kältequelle (M1, M2, M3, RE1, RE2, RE3),
- Erfassungsmittel, die geeignet sind, um festzustellen, ob Wärme oder Kälte im Bereich einer der Quellen verfügbar ist,
- Steuer- und Regelungsmittel, die geeignet sind, die im Bereich der Quellen verfügbare Wärme oder Kälte auf die zu beheizenden oder zu kühlenden Elemente je nach vorübergehendem oder nominalem Bedarf zu verteilen, wobei es Vorhersagemittel umfasst, die geeignet sind, zumindest eine Vorhersage zu erstellen, um festzustellen

• ob zu einem späteren Zeitpunkt Wärme oder Kälte im Bereich einer der Quellen verfügbar sein wird und/oder
• ob zu einem späteren Zeitpunkt ein Bedarf an Wärme oder Kälten im Bereich eines der zu beheizenden oder zu kühlenden Elemente bestehen wird,

wobei es Managementmittel umfasst, die geeignet sind zum

- Bestimmen eines Wärme-/Kältebedarfs für eines oder mehrere der zu beheizenden oder zu kühlenden Elemente des Fahrzeugs und/oder eines Strombedarfs für eines oder mehrere der elektrisch zu versorgenden Elemente des Fahrzeugs, ausgehend von Eingabedaten, die sich auf den Zustand der zu beheizenden oder zu kühlenden Elemente des Fahrzeugs, den Zustand der Wärme- oder Kältequellen, eine Anforderung von einem Nutzer und/oder eine Vorhersage beziehen,
- Bestimmen eines Betriebsmodus des Systems anhand des Wärme-/Kältebedarfs, des Strombedarfs und/oder einer Vorhersage,
- Betätigen von Stellgliedern des Systems, um das System gemäß des gewählten Betriebsmodus zu betreiben, **dadurch gekennzeichnet, dass** das System eine Strategie für das Thermomanagement umsetzt, die in drei Kontrollebenen hierarchisch gegliedert ist, nämlich
- eine erste Ebene, die für die Vorhersage zur Optimierung des Thermomanagements des Systems vorgesehen ist, wobei die Vorhersage auf einem Modell und/oder gesammelten Daten basiert, die durch Lernalgorithmen und/oder Techniken der künstlichen Intelligenz verarbeitet werden und es ermöglichen, ein Modell des Fahrzeugsystems, d. h. des Fahrzeugs und insbesondere der zu kühlenden und zu beheizenden Elemente sowie des Thermomanagementsystems, zu erhalten,
- eine zweite Ebene, die das Thermomanagement des Systems in Echtzeit bestimmt, wobei die zweite Strategieebene einen geeigneten und optimierten thermischen Modus auswählt, um den ordnungsgemäßen Betrieb der Elemente des Systems und des Fahrzeugs zu gewährleisten, indem der thermische Zustand der Elemente des Systems und des Fahrzeugs in Echtzeit sowie die Vorhersagedaten der ersten Ebene berücksichtigt werden,
- eine dritte Ebene, die Steuervorgaben für die Aktivierung oder Deaktivierung der ausgewählten Stellglieder des Systems in Abhängigkeit von dem auf der zweiten Ebene gewählten thermischen Modus bestimmt.

2. System nach Anspruch 1,
   **dadurch gekennzeichnet, dass** die Vorhersagemittel geeignet sind, die spätere Verfügbarkeit von Wärme und/oder Kälte und/oder den späteren Bedarf an Wärme und/oder Kälte anhand zumindest einer der folgenden Eingabedaten zu berechnen:

   - Daten, die sich auf die Gewohnheiten und/oder Komfortvorlieben des Nutzers beziehen, insbesondere:

     • Daten im Zusammenhang mit der vom Nutzer üblicherweise gewünschten Temperatur des Fahrgastraums,
     • vom Nutzer üblicherweise gewünschter Luftstrom im Fahrzeuginnenraum,
     • vom Nutzer üblicherweise gewünschte Verteilung des Luftstroms im Fahrgastraum auf verschiedene Lufteintrittspunkte in den Fahrgastraum, wie beispielsweise Belüftungsöffnungen,
     • vom Nutzer üblicherweise gewünschte Verteilung zwischen der Frischluft von außerhalb des Fahrgastraums und der Umluft aus dem Fahrgastraum,
     • vom Nutzer üblicherweise gewünschte Ausrichtung der Belüftungsöffnungen,

   - Daten, die sich auf die Fahrgewohnheiten und/oder -vorlieben des Nutzers beziehen, insbesondere:

     • Daten, die sich auf die Geschwindigkeit des Fahrzeugs beziehen,
     • Fahrzeit des Fahrzeugs,
     • Zeit, in der das Fahrzeug angehalten wird,
     • Beschleunigung des Fahrzeugs,
     • Drehzahl eines Verbrennungs- oder Elektromotors des Fahrzeugs,

   - Daten, die sich auf die Fahrstrecke des Nutzers beziehen, insbesondere:

     • geografische Koordinaten des vorgesehenen oder vom Nutzer vorgegebenen Abfahrts- und/oder Ankunftsortes,
     • geografische Echtzeitkoordinaten des Fahrzeugs,
     • meteorologische Daten wie Windgeschwindigkeit und -richtung, Temperatur, Niederschlag, Luftfeuchtigkeit, insbesondere auf der Fahrstrecke, am vorgesehenen Parkort und/oder am vorgesehenen Ankunftsort,
     • Verkehrsbedingungen auf der Fahrstrecke,
     • Wahrscheinlichkeit, dass der Nutzer sich innerhalb eines bestimmten Zeitraums an eine elektrische Ladestation für die Fahrzeugbatterie anschließt,

   - Daten, die sich auf den Gesundheitszustand der Batterie beziehen,
   - Daten im Zusammenhang mit dem Ladezustand einer Batterie, insbesondere:

     • Art der Batterieladung, wie etwa Schnellladung oder Normalladung,
     • voraussichtliche Ladezeit.

**3.** System nach Anspruch 1 oder 2,
**dadurch gekennzeichnet, dass** zumindest eine Wärme- und/oder Kältequelle auch ein Element bildet, das je nach den Betriebsbedingungen des Fahrzeugs zu beheizen oder zu kühlen ist.

**4.** System nach einem der Ansprüche 1 bis 3,
**dadurch gekennzeichnet, dass** es zumindest einen Wärmespeicher (S1) und zumindest einen Kältespeicher (S2) umfasst.

**5.** System nach einem der Ansprüche 1 bis 4,
**dadurch gekennzeichnet, dass** es zumindest eine Batterie umfasst, die geeignet ist, eine Wärme- oder Kältequelle zu bilden und/oder geeignet ist, ein zu beheizendes oder zu kühlendes Element zu bilden.

**6.** System nach Anspruch 5,
**dadurch gekennzeichnet, dass** die Batterie in einem Gehäuse montiert ist, das ein Phasenwechselmaterial aufnimmt, das geeignet ist, Wärme und/oder Kälte zu speichern.

**7.** System nach einem der Ansprüche 1 bis 6,
**dadurch gekennzeichnet, dass** es eine Vorrichtung zum Heizen, Lüften und/oder Klimatisieren eines Fahrgastraums des Fahrzeugs enthält, umfassend:

- einen Kältemittelkreislauf (2),
- einen Wärmeträgerkreislauf (1),
- einen ersten Wärmetauscher (E2), der geeignet ist, Wärme zwischen dem Wärmeträgermedium und der Luft auszutauschen, die in den Fahrgastraum des Fahrzeugs geleitet werden soll,
- einen zweiten Wärmetauscher (E4), der geeignet ist, Wärme zwischen dem Kühlmittel und der Luft auszutauschen, die in den Fahrgastraum des Fahrzeugs geleitet werden soll, und der geeignet ist, einen Kondensator zu bilden,
- einen dritten Wärmetauscher (E6), der geeignet ist, Wärme zwischen dem Kältemittel und der Luft auszutauschen, die in den Fahrgastraum des Fahrzeugs geleitet werden soll, und der geeignet ist, einen Verdampfer zu bilden,
- zumindest einen vierten Wärmetauscher (E1), der geeignet ist, Wärme zwischen dem Kältemittel und dem Wärmeträgermedium auszutauschen,
- Steuerungsmittel, die geeignet sind, Wärme oder Kälte zwischen den Quellen und den zu beheizenden oder zu kühlenden Elementen zu verteilen, und zwar über den Kältemittelkreislauf, den Wärmeträgerkreislauf und/oder die genannten Wärmetauscher.

**8.** System nach Anspruch 7,
**dadurch gekennzeichnet, dass** die Heizungs-, Lüftungs- und/oder Klimatisierungsvorrichtung einen fünften Wärmetauscher umfasst, der geeignet ist, Wärme zwischen dem Wärmeträgermedium oder dem Kältemittel einerseits und heißen Gasen aus einem Abgasstrang des Fahrzeugs andererseits auszutauschen.

**9.** System nach Anspruch 5 und nach einem der Ansprüche 7 oder 8,
**dadurch gekennzeichnet, dass** die Batterie zum Wärmeaustausch mit dem Wärmeträgermedium geeignet ist.

**10.** System nach einem der Ansprüche 1 bis 9,
**dadurch gekennzeichnet, dass** der Speicher zum Wärmeaustausch mit dem Wärmeträgermedium geeignet ist.

**11.** System nach einem der Ansprüche 1 bis 10,
**dadurch gekennzeichnet, dass** es Managementmittel umfasst, die geeignet sind, einen eventuellen Überschuss an elektrischer Energie, der in der Fahrzeugbatterie enthalten ist und der in Abhängigkeit von der erstellten Vorhersage bestimmt wird, zu nutzen, um ein intelligentes Stromnetz außerhalb des Fahrzeugs zu versorgen.

**12.** Thermomanagementverfahren für ein Fahrzeug mit einem System nach einem der Ansprüche 1 bis 11,
**dadurch gekennzeichnet, dass** es die folgenden Schritte umfasst:

- Erstellen zumindest einer Vorhersage, um festzustellen

  • ob zu einem späteren Zeitpunkt Wärme oder Kälte an einer der Quellen verfügbar sein wird und/oder

• ob zu einem späteren Zeitpunkt ein Bedarf an Wärme oder Kälte an einem der zu beheizenden oder zu kühlenden Elemente bestehen wird,

- Verteilen der an den Quellen verfügbaren Wärme oder Kälten auf die zu beheizenden oder zu kühlenden Elemente, je nach Bedarf, insbesondere je nach der genannten Vorhersage.

**Claims**

1. A thermal-management system for a vehicle comprising:

    - at least one calories and/or frigories storage (S1, S2) forming a source of calories or frigories,
    - at least one element (M1, M2, M3) of the vehicle to be heated or cooled,
    - at least one additional source (M1, M2, M3, RE1, RE2, RE3) of calories or frigories,
    - detection means adapted to detect whether calories or frigories are available at one of the said sources,
    - control means able to distribute the calories or frigories available at the sources to the elements to be heated or cooled, according to transient or nominal needs,

    comprising prediction means capable of making at least one prediction aimed at determining:

    • whether calories or frigories will be available at a later date from any of the said sources and/or,
    • whether a need for calories or frigories will exist at a later date at one of the said elements to be heated or cooled.

    and in that it comprises management means capable of:

    - defining a thermal need for one or more of the elements of the vehicle to be heated or cooled and/or an electrical need for one or more of the elements of the vehicle to be supplied electrically, on the basis of input data relating to the state of the elements of the vehicle to be heated or cooled, and relating to the state of the sources of calories or frigories, of a request from a user and/or of a prediction,
    - defining an operating mode of the system on the basis of the said thermal need, the said electrical need and/or a prediction,
    - operating the system's actuators, so as to operate the system according to the chosen operating mode,

    **characterized in that** said system implements a hierarchical thermal-management strategy in three levels of control,

    - a first level, dedicated to prediction to optimize the thermal-management of the system, said prediction being based on a model and/or collected data, which are processed by learning algorithms and/or artificial intelligence techniques to obtain a model of the system, in this case the vehicle and in particular the elements to be cooled and heated and the thermal-management system,
    - a second level, defining the thermal-management of the system in real-time, said second level selecting a suitable and optimized thermal mode to ensure the proper operation of system elements and vehicle elements by taking into consideration the thermal state of the system elements and vehicle elements in real-time, as well as the prediction data of the first level of the strategy,
    - a third level, defining the control laws for activating or deactivating the selected components according to the thermal mode selected at the second level.

2. A system according to claim 1, **characterized in that** the prediction means are capable of calculating the subsequent availability of calories and/or frigories, and/or the subsequent requirements for calories and/or frigories from at least one of the following input data:

    - data related to the user's habits and/or comfort preferences, in particular:

        • data related to the vehicle's interior temperature usually desired by the user,
        • the airflow rate usually desired by the user in the passenger compartment,
        • distribution of the airflow usually desired by the user in the passenger compartment, between different air-entry points in the passenger compartment, such as air vents,
        • distribution between the fresh air from outside the passenger compartment and the recycled air from the passenger compartment, usually desired by the user,

• the orientation of the air vents usually desired by the user,

- data related to the user's driving habits and/or preferences, in particular:

  • data related to the vehicle's speed,
  • vehicle's running time,
  • vehicle's downtime,
  • vehicle's acceleration,
  • speed of an internal combustion engine or electric engine of the vehicle,

- data related to the user's journey, in particular:

  • geographical coordinates of the place of departure and/or the place of arrival planned or provided by the user,
  • real-time geographical coordinates of the vehicle,
  • meteorological data, such as wind speed and direction, temperature, rainfall, humidity, in particular along the journey, the parking place and/or the planned arrival place,
  • traffic conditions along the journey,
  • probability that the user will connect to an electric charging station of the vehicle's electric battery within a given time period,

- data related to the health of the battery,
- data related to the state of charge of a battery, in particular:

  • type of battery charge, such as fast charge or normal charge,
  • expected charging time.

3. A system according to claim 1 or 2, **characterised in that** at least one calories source and /or frigories source also forms an element to be heated or cooled, according to the operating conditions of the vehicle.

4. A system according to one of claims 1 to 3, **characterized in** it comprises at least one calories storage (S1) and at least one frigories storage (S2).

5. A system according to one of claims 1 to 4, **characterized in that** it comprises at least one battery capable of forming a source of calories or frigories and/or capable of forming an element to be heated or cooled.

6. A system according to claim 5, **characterized in that** the battery is mounted in a housing accommodating a phase-change material capable of storing calories and/or frigories.

7. A system according to one of claims 1 to 6, **characterized in that** it comprises a device for heating, ventilating and/or conditioning a passenger compartment of the vehicle, comprising:

  - a refrigerant fluid circuit (2),
  - a heat-transfer fluid circuit (1),
  - a first heat exchanger (E2) capable of exchanging heat between the heat-transfer fluid and the air intended to enter the passenger compartment of the vehicle,
  - a second heat exchanger (E4) capable of exchanging heat between the refrigerant fluid and the air intended to enter the passenger compartment of the vehicle and capable of forming a condenser,
  - a third heat exchanger (E6) capable of exchanging heat between the refrigerant fluid and the air intended to enter the passenger compartment of the vehicle and capable of forming an evaporator,
  - at least a fourth heat exchanger (E1), capable of exchanging heat between the refrigerant fluid and the heat-transfer fluid,
  - the control means being able to distribute the calories or frigories between the sources and the elements to be heated and cooled, through the refrigerant fluid circuit, the heat-transfer fluid circuit and/or, from the said exchangers.

8. A system according to claim 7, **characterized in that** the heating, ventilation and/or conditioning device comprises a fifth heat exchanger capable of exchanging heat between, firstly, the heat-transfer fluid or the refrigerant fluid and, secondly, hot gases from an exhaust line of the vehicle.

9. A system according to claim 5 and according to one of claims 7 or 8, **characterized in that** the battery is capable of exchanging heat with the heat-transfer fluid.

10. A system according to one of the claims 1 to 9, **characterized in that** the storage is capable of exchanging heat with the heat-transfer fluid.

11. A system according to one of claims 1 to 10, **characterized in that** it comprises management means capable of using any surplus electrical energy contained in the vehicle battery, determined according to the prediction made, to supply an intelligent electric network outside the vehicle.

12. A thermal-management method for a vehicle comprising a system according to one of claims 1 to 11, **characterised in that** it comprises the steps that consist in:

- making at least one prediction to determine:

  • whether calories or frigories will be available at a later date from any of the said sources and/or,
  • whether a need for calories or frigories will exist at a later date at one of the said elements to be heated or cooled.

- distributing the calories or frigories available at the sources to the elements to be heated or cooled, as required, in particular according to the said prediction.

**Fig. 1**

FIG. 2

Sortie du système

FIG. 3

Prédictions

Données véhicule/utilisateur

FIG. 4

FIG. 5

FIG. 6

FIG. 7

FIG. 8

Chauffage

Refroidissement

Neutre

Inapplicable

$T_{max}$

40

30

20

10

zone a

25°C

zone b

35°C

zone c

$T_{min}$

10  15  20  25  30  35  40

FIG. 9

FIG. 10

Départ
mesure de $T_{bat}$

oui  $T_{bat} \in zone\ a$  non

oui  $T_{bat} \in zone\ b$  non

oui  $T_{bat} \in zone\ c$  non

Requête
thermique de
chauffage

Requête
thermique
neutre

Requête
thermique de
refroidissement

Erreur

EP 3 873 753 B1

FIG. 11

FIG. 12

FIG. 13

FIG. 14

**FIG. 15a**

**FIG. 15b**

FIG. 15c

**Instructions III**

Arrêt de l'utilisation des calories du circuit HTC et de la pompe à chaleur

recirculation d'air avec une proportion de 80% d'air neuf

recirculation d'air avec une proportion de 30% d'air neuf

**Instructions IV**

Utilisation de l'air climatisé

Arrêt de l'air climatisé

Utilisation des frigories disponibles dans le stockeur de frigories

Arrêt de l'utilisation des frigories disponibles dans le stockeur de frigories

recirculation d'air avec une proportion de 30% d'air neuf

Recharge en frigories du stockeur de frigories

Recharge en calories du stockeur de calories

FIG. 15d

## Instructions V

FIG. 15e

## Instructions VI

FIG. 15f

## Instructions VII

non → **Arrêt de l'HVAC**

$b_9$

oui → **Utilisation de la pompe à chaleur**

oui → **Utilisation de l'air climatisé**

→ **Distribution d'air sur le pare-brise**

→ **Prélèvement important d'air neuf**

FIG. 15g

## Instructions VIII

oui → **Utilisation des calories du circuit HTC Arrêt de l'HVAC**

$a_{10}$

non

$b_{10}$ oui → **Utilisation de la pompe à chaleur**

non → **Arrêt de l'HVAC**

$d_{10}$ oui → **Utilisation des calories stockées dans le stockeur de calories**

non → **Arrêt de l'utilisation des calories disponibles dans le stockeur de calories**

→ **Distribution d'air sur le pare-brise**

→ **Prélèvement important d'air neuf**

FIG. 15h

```
┌─────────────────────┐
│      Début          │
│   Mesure de T_PE    │
└─────────────────────┘
          │
          ▼
        ╱TPE ╲
 Oui   ╱  < 40 ╲   Non
◄─────╲        ╱─────►
        ╲    ╱
          ▼                              ▼
┌─────────────┐              ┌──────────────────┐
│   Requête   │              │     Requête      │
│  thermique  │              │   thermique de   │
│   neutre    │              │  refroidissement │
└─────────────┘              └──────────────────┘
```

FIG. 16

**RÉFÉRENCES CITÉES DANS LA DESCRIPTION**

**Documents brevets cités dans la description**

- WO 2018069629 A
- US 2010107635 A1